(19)

**Europäisches Patentamt**
**European Patent Office**
**Office européen des brevets**

(11) **EP 4 761 299 A1**

(12) **EUROPEAN PATENT APPLICATION**
published in accordance with Art. 153(4) EPC

(43) Date of publication:
**17.06.2026 Bulletin 2026/25**

(21) Application number: **23953688.1**

(22) Date of filing: **28.09.2023**

(51) International Patent Classification (IPC):
**H04W 4/021** (2018.01)

(52) Cooperative Patent Classification (CPC):
**H04W 4/021**

(86) International application number:
**PCT/CN2023/122675**

(87) International publication number:
**WO 2025/065540 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **HUAWEI TECHNOLOGIES CO., LTD.**
**Shenzhen 518129 (CN)**

(72) Inventors:
• **WANG, Yu**
  **Shenzhen, Guangdong 518129 (CN)**

• **WANG, Jun**
  **Shenzhen, Guangdong 518129 (CN)**
• **LUO, Hejia**
  **Shenzhen, Guangdong 518129 (CN)**
• **LUO, Jiajin**
  **Shenzhen, Guangdong 518129 (CN)**
• **MENG, Xian**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **COMMUNICATION METHOD AND APPARATUS**

(57) A communication method and apparatus are provided. The method may be applied to non-terrestrial network NTN communication. The method includes: A first network device determines first information, and sends the first information to a second network device. The first information indicates at least one region corresponding to the first network device. The region is fixed relative to the earth. A geographical location of the region is determined based on an identifier of the region. According to this solution, the region is fixed relative to the earth, and the geographical location of the region may be determined based on the identifier of the region. Therefore, network devices may exchange information based on the identifier of the region, to indicate conditions such as coverage regions and service regions of the network devices. This can reduce signaling overheads compared with direct exchanging information such as a geographical location and a contour of a region.

Moment t0   Moment t1   Moment t2

Earth-moving mode

FIG. 1A

Moment t0   Moment t1   Moment t2

Earth-fixed mode

FIG. 1B

**Description**

**TECHNICAL FIELD**

Embodiments of this application relate to the communication field, and in particular, to a communication method and apparatus.

**BACKGROUND**

A non-terrestrial network (non-terrestrial network, NTN) has significant advantages such as global coverage, long-distance transmission, flexible networking, convenient deployment, and not limited by a geographical condition, and has been widely applied to many fields such as maritime communication, positioning navigation, disaster relief, scientific experiments, video broadcasting, and earth observation. The NTN network and a terrestrial network may be integrated and complement each other to jointly form a globally seamless space-air-ground-sea integrated communication network, to satisfy a plurality of service requirements of users in various respects.

As an important part of the NTN, a next generation satellite network is generally in a trend of being ultra-dense and heterogeneous. First, a quantity of satellites has increased from 66 in the Iridium satellite constellation to 720 in the OneWeb satellite constellation, and finally to 12000+ in the Starlink (Starlink) ultra-dense low-earth orbit (low-earth orbit, LEO) satellite constellation. Second, a satellite network is heterogeneous. A conventional single-layer communication network has evolved to a multi-layer communication network. A communication satellite network tends to have complex and diversified functions, and is gradually compatible with and supports functions such as navigation augmentation, earth observation, and on-orbit processing of multi-dimensional information.

With dense deployment of satellites, a problem of interference between the satellites gradually emerges. Therefore, how to exchange related information of a coverage region of a satellite to assist in interference management is an urgent problem to be resolved currently.

**SUMMARY**

Embodiments of this application provide a communication method and apparatus, to reduce signaling overheads when region-related information is exchanged between network devices.

According to a first aspect, a communication method is provided. The method may be performed by a first network device; may be performed by a component of a first network device, for example, a processor, a chip, or a chip system of the first network device; or may be implemented by a logical module or software that can implement all or a part of functions of the first network device. The method includes: determining first information, and sending the first information to a second network device. The first information indicates at least one region corresponding to the first network device. The region is fixed relative to the earth. A geographical location of the region is determined based on an identifier of the region.

According to this solution, the ground may be discrete into some regions that are fixed relative to the earth, and geographical locations of the regions may be determined based on identifiers of the regions. Therefore, network devices may exchange information based on the identifier of the region, to indicate conditions such as coverage regions and service regions of the network devices. After a specific network device receives information of another network device, because the identifier of the region may determine the geographical location of the region, the network device may learn of a coverage region of the another network device, a geographical location of a service region, and the like based on the identifier of the region, and then perform interference management based on the learned information. This can significantly reduce signaling overheads compared with directly exchanging information such as a contour of a region for interference management.

In a possible design, the geographical location of the region is further determined based on at least one of the following: a radius of the region, an earth radius, and a total quantity of regions.

Based on this possible design, a total quantity of regions, a radius of a region, and the earth radius may be the same for all regions. In other words, the total quantity of regions, the radius of the region, and the earth radius may be considered as constants. In this case, it may be considered that a variable that affects a geographical location of a region is an identifier of the region.

In a possible design, the region includes a reference location, and three-dimensional coordinates of the reference location and the identifier of the region satisfy the following relationship:

$$RL(i) = R_e \times (\cos \varphi_i \sin \theta_i , \sin \varphi_i \sin \theta_i , \cos \theta_i),$$

$$\varphi_i = 2\pi \left[ \frac{2i}{1+\sqrt{5}} \right],$$

and

$$\theta_i = \cos^{-1}\left(1 - \frac{2i+1}{N_{spot}}\right), i \in \{0, \cdots, N_{spot} - 1\}.$$

$i$ represents the identifier of the region, $RL(i)$ represents the three-dimensional coordinates of the reference location, $R_e$ represents the earth radius, $[x]$ represents a fractional part of $x$, and $N_{spot}$ represents the total quantity of regions.

In a possible design, a projection $RL(x_i, y_i)$ of the reference location on a unit square (Unit square) and the identifier of the region satisfy the following relationship:

$$RL(x_i) = (1 - cos\theta_i)/2,$$

and

$$RL(y_i) = \varphi_i(2\pi)^{-1}.$$

The unit square is a square whose vertexes are at (0, 0), (1, 0), (0, 1), and (1, 1) on a Cartesian plane. $RL(x_i)$ represents a projection metric of the reference location on an $x$-axis direction of the unit square, and $RL(y_i)$ represents a projection metric of the reference location in a $y$-axis direction of the unit square.

In a possible design, Cartesian coordinates $RL(x_i, y_i)$ of the reference location and the identifier of the region satisfy the following relationship:

$$RL(x_i) = i/N_{spot},$$

and

$$RL(y_i) = \left[\frac{i}{\emptyset}\right], \emptyset = \frac{1+\sqrt{5}}{2}.$$

$RL(x_i)$ represents a projection metric of the reference location in the region in an $x$-axis direction of a Cartesian coordinate system, and $RL(y_i)$ represents a projection metric of the reference location in the region in a $y$-axis direction of the Cartesian coordinate system.

In a possible design, the region includes a reference location, and three-dimensional coordinates of the reference location and the identifier of the region satisfy the following relationship:

$$RL(i) = R_e \times \left(\sqrt{1 - z_i^2} \cos 2\pi i \, \emptyset, \sqrt{1 - z_i^2} \sin 2\pi i \, \emptyset, z_i\right),$$

$$z_i = \frac{2i-1}{N_{spot}} - 1, i \in \{1, \cdots, N_{spot}\},$$

and

$$\emptyset = \frac{1+\sqrt{5}}{2}.$$

$i$ represents the identifier of the region, $RL(i)$ represents the three-dimensional coordinates of the reference location, $R_e$ represents the earth radius, and $N_{spot}$ represents the total quantity of regions.

In a possible design, the region includes a reference location, and longitude and latitude coordinates of the reference location and the identifier of the region satisfy the following relationship:

$$RL(i) = (\mathrm{lon}(i), \mathrm{lat}(i)),$$

$$\mathrm{lon}(i) = \sin^{-1}\left(\frac{2i}{2N+1}\right), N = \frac{N_{spot}-1}{2},$$

and

$$\mathrm{lat}(i) = 2\pi i \emptyset^{-1}, i \in \{1, \cdots, N_{spot}\}, \emptyset = \frac{1+\sqrt{5}}{2}.$$

lon(i) represents longitude of the reference location, lat(i) represents latitude of the reference location, and $N_{spot}$ represents the total quantity of regions.

In a possible design, the radius of the region and the total quantity of regions satisfy the following relationship:

$$N_{spot} = \frac{8\pi R_e^2}{3\sqrt{3}R_{spot}^2}.$$

$R_e$ represents the earth radius, $N_{spot}$ represents the total quantity of regions, and $R_{spot}$ represents the radius of the region.

Based on the foregoing several possible designs, in one aspect, coordinates of a reference location in a region can be quickly and accurately determined based on an identifier of the region, so that a contour, a geographical location, and the like of the region can be quickly and accurately determined. In another aspect, a radius of the region can be flexibly adjusted to adapt to different load capabilities, for example, to adapt to different beam radii. In still another aspect, because the geographical location of the region can be determined based on the identifier of the region, information exchange may be performed between network devices based on the identifier of the region, to indicate conditions such as coverage regions and service regions of the network devices. This design can significantly reduce signaling overheads compared with directly exchanging information such as a beam reference point and a beam coverage region contour for interference management. Unlike a manner of performing division based on an H3 geographical grid, because a total quantity of regions is relatively small, a quantity of bits required for indicating a region identifier is also relatively small, thereby reducing signaling overheads.

In a possible design, the first information includes an identifier of each of the at least one region. Based on this possible design, because geographical location information of the region can be learned based on the identifier of the region, the first information includes the identifier of each region, to indicate information such as the geographical location of the region. This can reduce signaling overheads compared with directly sending the geographical location information of the region.

In a possible design, the first information includes an identifier of a first region and a first threshold. A distance between a reference location in each of the at least one region and a reference location in the first region is less than or equal to the first threshold; or a difference between an identifier of each of the at least one region and the identifier of the first region is less than or equal to the first threshold.

Based on this possible design, the at least one region corresponding to the first network device may be indicated by using the identifier of the first region and the first threshold. This can reduce signaling overheads compared with directly sending information such as the geographical location and the contour of the region.

In a possible design, the first information includes a first elevation angle. An elevation angle at a reference location in each of the at least one region is greater than or equal to the first elevation angle.

Based on this possible design, the at least one region corresponding to the first network device may be indicated by using the first elevation angle. This can reduce signaling overheads compared with directly sending information such as the geographical location and the contour of the region.

In a possible design, the at least one region corresponding to the first network device is a region in a coverage region of the first network device. Based on this possible design, the second network device may learn of a coverage region of the first network device, to perform interference management based on the coverage region of the first network device.

In a possible design, the first information is a bitmap, the bitmap includes M bits, M is a total quantity of regions included in a coverage region of the first network device, and M is a positive integer. The M bits are in a one-to-one correspondence with M regions included in the coverage region. When an $m^{th}$ bit is set to a preset value, a region corresponding to the $m^{th}$ bit is the region served by a beam of the first network device, and $m = 1, 2, \cdots, M$.

Based on this possible design, the second network device can learn of the identifier of the at least one region corresponding to the first network device, to learn of information such as the geographical location and the contour of the region based on the identifier of the region. This can reduce signaling overheads compared with directly sending the information such as the geographical location and the contour of the region.

In a possible design, the first information includes an index of the at least one region in a region set, and the region set includes a region included in the coverage region of the first network device.

In a possible design, the method further includes: sending, to the second network device, at least one piece of the following information of the at least one region corresponding to the first network device: a service periodicity, a service duration, a frequency, polarization information, or a service time.

Based on this possible design, the second network device can learn of the information such as the service periodicity, the service time, and the frequency of the at least one region corresponding to the first network device, so that the second network device can learn of more detailed region-related information, thereby facilitating more refined interference management performed by the second network device and improving interference management performance.

In a possible design, the at least one region corresponding to the first network device is the region served by the beam of the first network device. Based on this possible design, the second network device may learn of the region served by the beam of the first network device, to perform interference management based on the region served by the beam of the first network device.

In a possible design, the first information includes a second elevation angle, and an elevation angle at a reference location in each of the at least one region is less than or equal to the second elevation angle.

Based on this possible design, the at least one region corresponding to the first network device may be indicated by using the first elevation angle. This can reduce signaling overheads compared with directly sending information such as the geographical location and the contour of the region.

In a possible design, the method further includes: sending, to the second network device, resource information and/or time information associated with the at least one region corresponding to the first network device. The resource information includes at least one of the following: a service periodicity, a service duration, a frequency, or polarization information. The time information indicates a time at which a target network device starts to cover the at least one region and/or the latest time at which the target network device covers the at least one region.

Based on the possible design, the second network device can learn of the resource information and/or the time information associated with the at least one region, so that the second network device can cover or serve the region based on the resource information and/or the time information, thereby improving coverage or service continuity of the region and improving service quality of the terminal device in the region.

In a possible design, the at least one region corresponding to the first network device is a region that is uncoverable by the first network device. Based on this possible design, the second network device can learn of a region that is about to be not covered by the first network device, so that the second network device replaces the first network device to cover or serve the region, thereby improving coverage or service continuity of the region and improving service quality of a terminal device in the region.

According to a second aspect, a communication apparatus is provided, to implement various methods. The communication apparatus may be the first network device in the first aspect, or an apparatus included in the first network device, for example, a chip or a chip system. The communication apparatus includes a corresponding module, unit, or means (means) for implementing the methods. The module, the unit, or the means may be implemented by using hardware or software, or by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects and any possible implementation of the foregoing aspects. The transceiver module may include a receiving module and a sending module that are respectively configured to implement a receiving function and a sending function in any one of the foregoing aspects and any possible implementation of the foregoing aspects.

In some possible designs, the transceiver module may include a transceiver circuit, a transceiver machine, a transceiver, or a communication interface.

According to a third aspect, a communication apparatus is provided, and includes a processor and a memory. The memory is configured to store computer instructions. When the processor executes the instructions, the communication apparatus is enabled to perform the method according to any one of the aspects. The communication apparatus may be the first network device in the first aspect, or an apparatus included in the first network device, for example, a chip or a chip system.

According to a fourth aspect, a communication apparatus is provided, and includes a processor and a communication interface. The communication interface is configured to communicate with a module outside the communication apparatus, and the processor is configured to execute a computer program or instructions, to enable the communication apparatus to perform the method according to any one of the foregoing aspects. The communication apparatus may be the first network device in the first aspect, or an apparatus included in the first network device, for example, a chip or a chip system.

According to a fifth aspect, a communication apparatus is provided, and includes at least one processor. The processor is configured to execute a computer program or instructions stored in a memory, to enable the communication apparatus to perform the method according to any one of the foregoing aspects. The memory may be coupled to the processor, or may be independent of the processor. The communication apparatus may be the first network device in the first aspect, or an apparatus included in the first network device, for example, a chip or a chip system.

According to a sixth aspect, a computer-readable storage medium is provided. The computer-readable storage medium stores a computer program or instructions. When the computer program or the instructions are run on a communication apparatus, the communication apparatus may be enabled to perform the method according to the first aspect and any possible design of the first aspect.

According to a seventh aspect, a computer program product including instructions is provided. When the computer program product runs on a communication apparatus, the communication apparatus may be enabled to perform the method according to the first aspect and any possible design of the first aspect.

According to an eighth aspect, a communication apparatus (for example, the communication apparatus may be a chip or a chip system) is provided. The communication apparatus includes a processor, configured to implement the function in the first aspect and any possible design of the first aspect.

In some possible designs, the communication apparatus includes a memory, and the memory is configured to store necessary program instructions and data.

In some possible designs, when the apparatus is a chip system, the apparatus may include a chip, or may include a chip and another discrete component.

It can be understood that when the communication apparatus provided in any one of the second aspect to the eighth aspect is a chip, the sending action/function of the communication apparatus can be understood as outputting information, and the receiving action/function of the communication apparatus can be understood as inputting information.

For technical effect brought by any one of the design manners of the second aspect to the eighth aspect, refer to technical effect brought by the different design manners of the first aspect. Details are not described herein again.

**BRIEF DESCRIPTION OF DRAWINGS**

FIG. 1A and FIG. 1B are diagrams of beam coverage ranges in an earth-moving mode and an earth-fixed mode in an NTN according to this application;

FIG. 2A and FIG. 2B are diagrams of a projection of a beam on the ground according to this application;

FIG. 3 is a diagram of a region description manner based on an H3 geographical grid according to this application;

FIG. 4 is a diagram of a group handover scenario according to this application;

FIG. 5 is a diagram of an architecture of a satellite network in a transparent mode according to this application;

FIG. 6 is a diagram of an architecture of a satellite network in a regenerative mode according to this application;

FIG. 7 is a diagram of an architecture of a satellite network in another regenerative mode according to this application;

FIG. 8 is a diagram of an architecture of a satellite network in still another regenerative mode according to this application;

FIG. 9 is a diagram of a converged network architecture of an NTN and a terrestrial network according to this application;

FIG. 10A and FIG. 10B are diagrams of a mapping relationship between a beam of a network device and a region according to this application;

FIG. 11 is a schematic flowchart of a communication method according to this application;

FIG. 12 is a diagram of a region that is uncoverable by a first network device according to this application;

FIG. 13 is a diagram of coverage regions of a first network device and a second network device according to this application;

FIG. 14A and FIG. 14B are diagrams of an elevation angle according to this application;

FIG. 15 is a diagram of a mapping relationship between a beam of a network device and a region according to this application;

FIG. 16 is a diagram of a structure of a communication apparatus according to this application;

FIG. 17 is a diagram of a structure of another communication apparatus according to this application; and

FIG. 18 is a diagram of a structure of still another communication apparatus according to this application.

**DESCRIPTION OF EMBODIMENTS**

In the description of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof means any combination of these items, including a singular item (piece) or any combination of plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In addition, in embodiments of this application, the word "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that an "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described herein.

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

For ease of understanding of the technical solutions in embodiments of this application, the following first briefly describes technologies related to this application.

1. Non-terrestrial network (non-terrestrial network, NTN)

Currently, 5th generation (5th generation, 5G) new radio (new radio, NR) has entered a commercial deployment phase from a standardization phase. The NR standard is mainly researched and designed based on characteristics of terrestrial communication. The terrestrial communication can provide a user terminal with high-rate, high-reliability, low-latency communication, and the like.

Compared with the terrestrial communication, NTN communication has prominent advantages such as global coverage, long-distance transmission, flexible networking, convenient deployment, and being not restricted by geographical conditions, and has been widely applied to a plurality of fields such as maritime communication, positioning and navigation, disaster relief, scientific experiments, video broadcasting, and earth observation. The NTN network and a terrestrial network may be integrated and complement each other to jointly form a globally seamless space-air-ground-sea integrated communication network, to satisfy a plurality of service requirements of users in various respects.

According to a height of a flight platform from the ground, the NTN may include a low-altitude platform (low altitude platform, LAP) subnetwork (LAP subnetwork), a high-altitude platform (high altitude platform, HAP) subnetwork (HAP subnetwork), and a satellite communication subnetwork (SATCOM subnetwork).

For example, in the LAP subnetwork, a base station or a base station function is deployed on a low-altitude flight platform (for example, an uncrewed aerial vehicle) 0.1 km to 1 km away from the ground to provide coverage for a terminal; in the HAP subnetwork, a base station or a base station function is deployed on a high-altitude flight platform (for example, an airplane) 8 km to 50 km away from the ground to provide coverage for a terminal; and in a SATCOM subnetwork, a base station or a base station function is deployed on a satellite more than 50 km away from the ground to provide coverage for a terminal.

Further, based on an orbital altitude of a satellite, satellite communication systems may be classified into a geostationary earth orbit (geostationary earth orbit, GEO) satellite communication system, a medium earth orbit (medium earth orbit, MEO) satellite communication system, and a low earth orbit (low-earth orbit, LEO) satellite communication system.

The GEO satellite communication system is also referred to as a synchronous orbit satellite system. An orbital altitude of a GEO satellite is 35786 km. A moving speed of the GEO satellite is the same as a rotation speed of the earth. In other words, the GEO satellite can remain stationary relative to the ground. The GEO satellite communication system can provide large cell coverage. Generally, a diameter of a cell is 500 km. However, the GEO satellite communication has obvious disadvantages: (1) An orbit of the GEO satellite is far away from the earth, and a propagation loss in free space is large. As a result, a communication link budget is tight. To increase a transmit/receive gain, the satellite needs to be equipped with an antenna with a large diameter. (2) A communication transmission delay is high, and a round-trip delay may reach about 500 milliseconds, which cannot satisfy a requirement of a real-time service. (3) GEO orbital resources are relatively tight, launch costs are high, and coverage cannot be provided for polar regions of the earth.

The orbital altitude of the MEO satellite ranges from 2000 km to 35786 km, and can implement global coverage with a relatively small quantity of satellites. However, the orbit height of the MEO satellite is higher than that of an LEO satellite, and a transmission delay of the MEO satellite communication is still longer than that of the LEO satellite communication. Therefore, in consideration of advantages and disadvantages of the MEO satellite communication, the MEO satellite is mainly used for positioning and navigation.

The orbital altitude of the LEO satellite ranges from 300 km to 2000 km. The orbital altitude of the LEO satellite is smaller than that of the MEO satellite. The LEO satellite has advantages such as a small transmission delay, a small transmission loss, and relatively low transmission costs.

A next-generation satellite communication system generally presents a trend of being ultra-dense and heterogeneous. First, a quantity of satellites has increased from 66 in the Iridium satellite constellation to 720 in the OneWeb satellite constellation, and finally to 12000+ in the Starlink (Starlink) ultra-dense LEO satellite constellation. Second, a satellite network is heterogeneous. A conventional single-layer communication network has evolved to a multi-layer communication network. A communication satellite network tends to have complex and diversified functions, and is gradually compatible with and supports functions such as navigation augmentation, earth observation, and on-orbit processing of multi-dimensional information.

2. Earth-moving (earth-moving) mode and earth-fixed (or quasi-earth fixed) mode

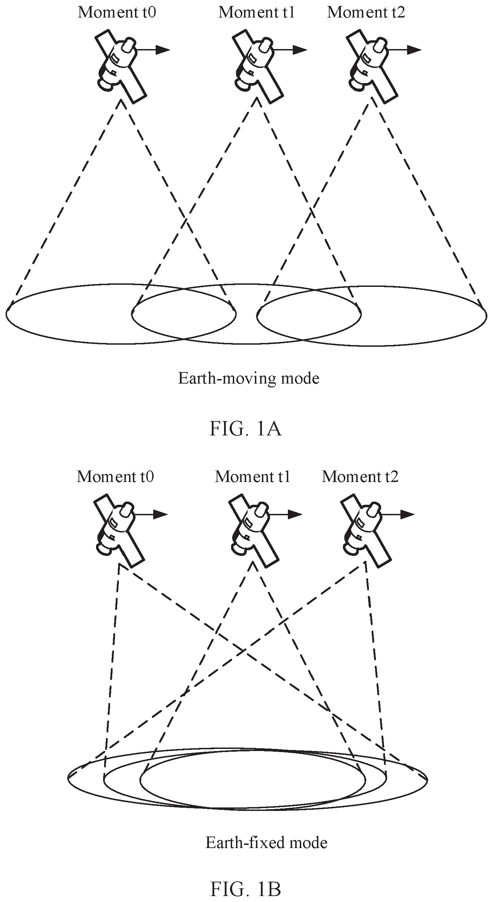

In a satellite communication system, classification may be generally performed according to a working mode of a beam to obtain the earth-moving mode and the earth-fixed mode. As shown in FIG. 1A, in the earth-moving mode, within a period of time (for example, between a moment t0 and a moment t2), a coverage range of a satellite beam moves with a satellite. As shown in FIG. 1B, in the earth-fixed mode, within a period of time (for example, between a moment t0 and a moment t2), a satellite dynamically adjusts a beam direction, so that a beam approximately covers a same region on the ground. However, in actual application, due to a precision problem of a beam direction and a distortion problem of beam projections at different incident angles on the ground, in the earth-fixed mode, a coverage region of a beam still jitters to some extent as time changes.

For example, the beam may be represented in a protocol as a spatial domain filter (spatial domain filter), a spatial filter (spatial filter), a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, or a QCL indication. The beam may be indicated by using a transmission configuration indication (transmission configuration indication, TCI) state (TCI-state) parameter, or may be indicated by using a spatial relation (spatial relation) parameter. Therefore, in this application, the beam may be replaced with the spatial domain filter, the spatial filter, the spatial domain parameter, the spatial parameter, the spatial domain setting, the spatial setting, the QCL information, the QCL assumption, the QCL indication, the TCI state, the spatial relation, or the like. The foregoing terms are equivalent to each other. In this application, the beam may alternatively be replaced with another term for representing a beam. This is not limited in this application.

3. NTN service region description

In a first possible implementation, contours (which may be understood as projections of beams on the ground) corresponding to antenna gains or received powers of different regions on the ground may be calculated based on an antenna pattern, for example, a given antenna model, to represent a service region of a satellite/cell. The contour may also be understood as a beam position.

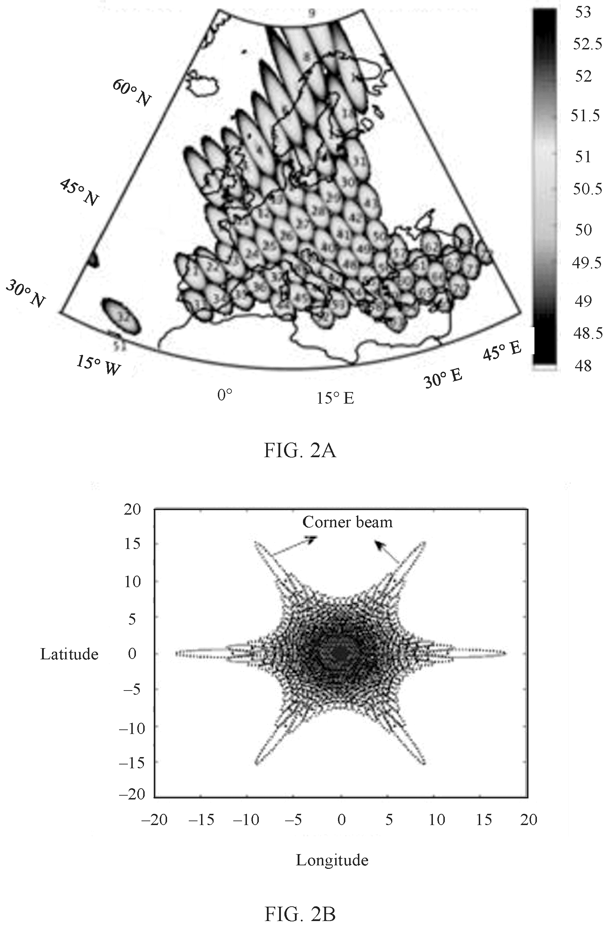

For example, as shown in FIG. 2A, an antenna gain pattern of a single GEO satellite 72-beam reference system is shown. An ellipse represents a projection of a beam on the ground, or represents a beam position. As shown in FIG. 2B, an ellipse is a contour of a beam of an LEO satellite in an earth-moving mode on a longitude and latitude plane.

In a first possible implementation, because a projection of a beam on the ground is understood as a beam position, it may be considered that the beam position is statically bound to the beam. Therefore, this solution is usually used for GEO satellite networks or satellite networks in the earth-moving mode. However, in an earth-fixed mode, an elevation angle between the satellite and a specific region on the ground changes dynamically, and the beam projection changes accordingly. Therefore, the solution of statically binding the beam position and the beam may be no longer applicable. In addition, because the projection of the beam on the ground is used as the beam position, a specific beam position can be only determined based on parameters such as a beam reference point, a beam coverage region contour, and a satellite motion vector. In this case, relatively large signaling overheads are required.

In a second possible implementation, a surface of the earth may be divided into a regular pentagon grid or a regular hexagon grid based on the H3 geographical grid, and the grid may be used to represent a service region of a satellite/cell. For example, the service region of the satellite/cell may include one or more grids. Each grid may be understood as a beam position. For example, when division is performed based on the H3 geographical grid, the earth is considered as an icosahedron. Each face of the icosahedron is a spherical triangle. The icosahedron has 12 vertices, and is referred to as a spherical icosahedron (spherical icosahedron). All faces of the spherical icosahedron have hexagons arranged in a same manner.

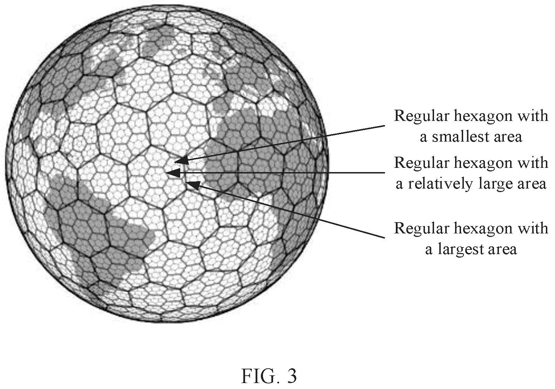

The second possible implementation supports hierarchical addressing of beam positions. For example, as shown in FIG. 3, there are three types of regular hexagons with small, medium, and large areas. A regular hexagon with a smallest area represents a beam position, and regular hexagons with the remaining two types of areas may be used for hierarchical addressing of beam positions. For ease of description, a regular hexagon with a largest area and a regular hexagon with a second largest area are respectively referred to as a first regular hexagon and a second regular hexagon in the following embodiments.

Based on the example shown in FIG. 3, during hierarchical addressing of beam positions, an index of the first regular hexagon may be understood as a first-layer index of a beam position, an index of the second regular hexagon may be understood as a second-layer index of a beam position, and an index of the regular hexagon with the smallest area may be understood as a third-layer index of a beam position. When a beam position is indexed, a first regular hexagon to which the beam position belongs may be first determined based on a first-layer index, then a second regular hexagon to which the beam position in the first regular hexagon belongs is determined based on a second-layer index, and finally the beam position in the second regular hexagon is determined based on a third-layer index.

In the second possible implementation, currently, beam position radii with only 16 types of different precision are supported, and therefore it is difficult to adapt to different load capabilities (for example, beam radii). For example, when precision of a beam position radius is at an integer level but a beam radius is not an integer, the beam position cannot be used to accurately represent a service region of a satellite/cell. In addition, in this solution, when a specific geographical location of a beam position is determined based on an index value of the beam position, the specific geographical location usually needs to be determined in an iterative cycle manner, and an accurate location of the beam position cannot be quickly calculated. In addition, the index value of the beam position is usually indicated by using 64 bits, and signaling overheads are relatively high.

4. Group handover and group reselection

Motion of a satellite causes group handover of a terminal device in a connected state in a specific region, or causes group reselection of a terminal device in an idle state in the region.

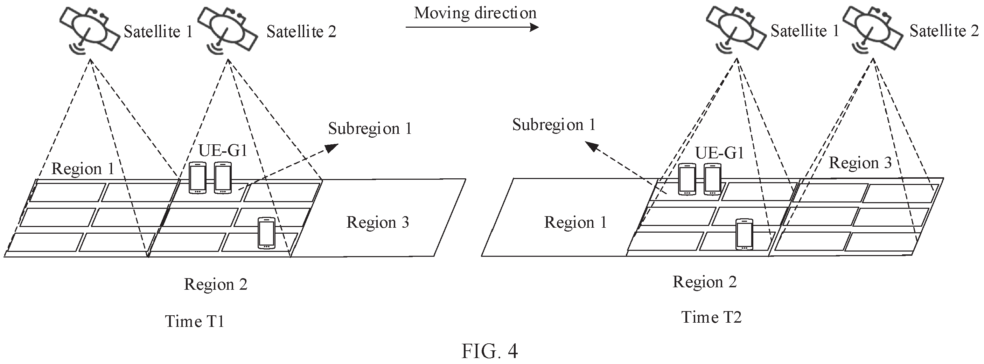

Group handover is used as an example. As shown in FIG. 4, it is assumed that a UE cluster (denoted as UE-G1, including a plurality of UEs) exists in a subregion 1 of a region 2. At a time $T_1$, the subregion 1 is served by one or more beams of a satellite 2. At a time T2, the satellite 2 cannot continue serving the subregion 1 due to motion of the satellite 2, and the satellite 2 is replaced by one or more beams of a satellite 1 to serve the subregion 1. In this process, because a satellite covering the subregion 1 changes, the plurality of UEs in the UE-G1 perform group handover, and are handed over from the satellite 2 to the satellite 1.

Because a moving speed of a satellite is relatively high, for example, a moving speed of an LEO satellite is about 7.5 km/s, and a group handover frequency is relatively high and is about once in several seconds to dozens of seconds.

5. NR cell interference management and inter-cell coordination

An NR system mainly deals with inter-beam interference from the following two dimensions: First, during NR cell deployment, physical cell identifier (physical cell identifier, PCI) conflict and confusion problems are resolved by using a criterion such as mod 3 or mod 30. Second, an interference coordination mechanism exists, for example, almost blank subframe (almost blank subframe, ABS) configuration, enhanced interference coordination, and a channel state information (channel state information, CSI) interference measurement (CSI interference measurement, CSI-IM) feedback mechanism. In addition, inter-cell resource coordination can be performed at a fine time granularity through inter-cell interfaces, to ensure service continuity and a quality of service requirement in an overlapping region between cells.

With dense deployment of satellites, a problem of interference between the satellites also gradually emerges. However, a cell interference management solution in NR may no longer be applicable to the NTN network. For example, a spatial domain dimension is added to the NTN network, and an interference condition is more complex. In addition, a satellite has a relatively large coverage area, and may cover hundreds to thousands of relatively small regions. If information such as locations and contours of these regions is exchanged between satellites, relatively large signaling overheads are generated. Therefore, how to exchange related information of a coverage region of a satellite, especially, related information of a coverage region of a satellite in a high dynamic scenario, to assist in interference management is an urgent problem to be resolved currently.

On this basis, this application provides a communication method. In this method, the ground may be discrete into some regions that are fixed relative to the earth, and geographical locations of the regions may be determined based on identifiers of the regions. Therefore, satellites may exchange identifiers of related regions of the satellites. After a specific satellite receives an identifier of a related region of another satellite, because the identifier of the region may determine a geographical location of the region, coverage and a service status of the another satellite can be learned based on the identifier of the region, to perform interference management. This can reduce signaling overheads compared with directly exchanging information such as a contour of a region.

The technical solutions in embodiments of this application may be applied to an NTN system such as a satellite communication system, high-altitude platform station (high altitude platform station, HAPS) communication, and an uncrewed aerial vehicle. For example, the technical solutions may be applied to an integrated communication and navigation (integrated communication and navigation, IcaN) system, a global navigation satellite system (global navigation satellite system, GNSS), and the like. The NTN system may be integrated with a conventional mobile communication system. For example, the mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5G communication system (for example, an NR system), a device-to-device (device-to-device, D2D) communication system, a machine-to-machine (machine, M2M) communication system, an internet of things (internet of things, IoT) communication system, an internet of vehicles communication system, and a future mobile communication system.

The communication system applicable to this application is merely an example for description. The communication system and the communication scenario applicable to this application are not limited thereto. The communication system and the communication scenario provided in this application do not constitute any limitation on the solutions of this application. A unified description is provided herein. Details are not described below again.

In a possible implementation, a communication system applicable to the solutions of this application may include at least one terminal device and at least one network device. For example, mutual communication may be implemented between terminal devices, between a terminal device and a network device, and between network devices in a wired or wireless manner.

Optionally, the terminal device may be a user-side device having wireless transmission and reception functions, or may be a chip or a chip system disposed in the device. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a terminal device in IoT, V2X, D2D, M2M, a 5G network, or a future evolved public land mobile network (public land mobile network, PLMN). The terminal device may be deployed on land, including an indoor device, an outdoor device, a handheld device, or a vehicle-mounted device; may be deployed on a water surface (for example, on a ship); or may be deployed in the air (for example, on an aircraft, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital processing (personal digital assistant, PDA) device, a handheld device having a wireless communication function, a computing device, another processing device connected to a wireless modem, a vehicle-mounted device, a wearable device (which may also be referred to as a wearable intelligent device), a tablet computer, a computer having wireless transmission and reception functions, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent networked vehicle, or an uncrewed aerial vehicle having an uncrewed aerial vehicle (unmanned aerial vehicle, UAV) to uncrewed aerial vehicle (UAV to UAV, U2U) communication capability. The terminal device may be mobile, or may be fixed. This is not specifically limited in this application.

Optionally, the network device may be a network-side device having wireless transmission and reception functions, or may be a chip, a chip system, or a module disposed in the device. The network device is located in a radio access network (radio access network, RAN) of a mobile communication system, and is configured to provide an access service for a terminal device.

In a possible implementation, the network device may be a wireless relay node or a wireless backhaul node. For example, the network device may be used as a layer 1 relay device, and is configured to regenerate a physical layer signal (that is, radio frequency filtering, frequency conversion, and amplification processing), without having another higher protocol layer.

In another possible implementation, the network device may implement a part or all of functions of a base station. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved PLMN; or may be a device that implements functions of a base station in IoT, V2X, D2D, or M2M.

For example, the network device may be a central unit (central unit, CU), a distributed unit (distributed unit, DU), a CU and a DU, a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings of the names. For example, the network device may be a network device in an open radio access network (open RAN, ORAN) system or a module of the network device. In an ORAN system, a CU may also be referred to as an open (open, O)-CU, a DU may also be referred to as an O-DU, a CU-CP may also be referred to as an O-CU-CP, a CU-UP may also be referred to as an O-CU-UP, and an RU may also be referred to as an O-RU. Any one of the CU (or the CU-CP or the CU-UP), the DU, and the RU in this application may be implemented by using a software module, a hardware module, or a combination of a software module and a hardware module.

For example, the base station in embodiments of this application may include base stations in various forms, for example, a macro base station, a micro base station (also referred to as a small cell), a relay station, and an access point. This is not specifically limited in embodiments of this application.

Optionally, the network device in embodiments of this application may be deployed on a non-terrestrial platform, for example, deployed on a low-altitude platform (for example, an uncrewed aerial vehicle), a high-altitude platform (for example, an airplane), or a satellite. Therefore, the network device in embodiments of this application may also be referred to as a non-terrestrial network device.

For example, the network device is deployed on a satellite, or the network device is a satellite. The communication system may further include an NTN gateway (NTN gateway) (or referred to as a gateway station). Usually, the NTN gateway is deployed on the ground. The NTN gateway may communicate with a satellite, and a link between the satellite and the NTN gateway may be referred to as a feeder link (feeder link).

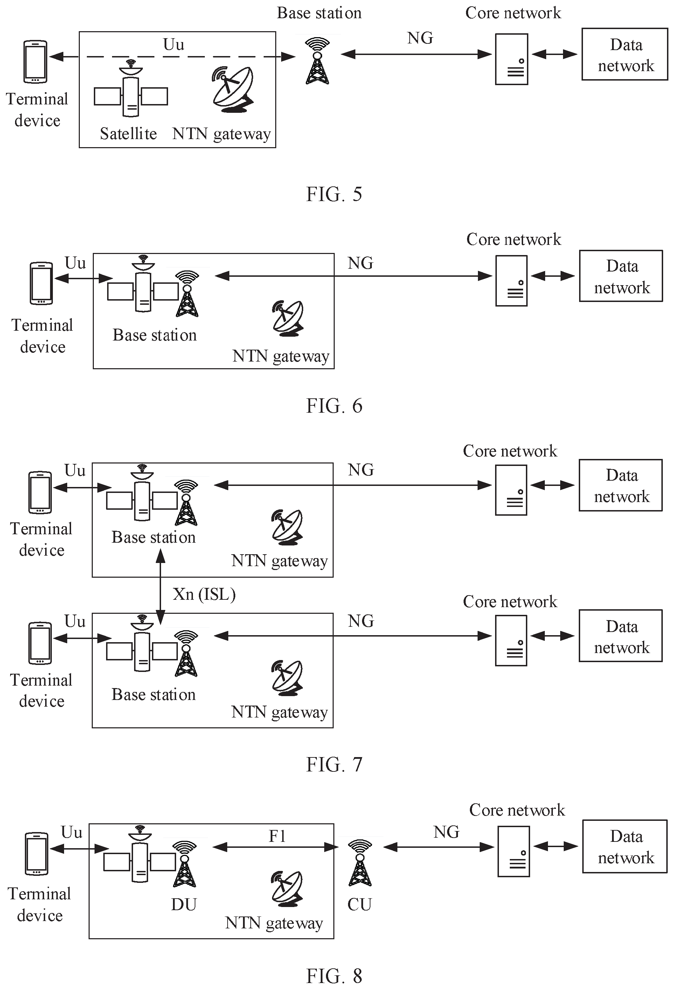

As shown in FIG. 5, when the satellite serves as a radio relay node, in other words, the satellite has a relay forwarding function, the NTN gateway has functions of a base station or a part of functions of a base station. In this case, the NTN gateway may serve as a base station. Alternatively, the NTN gateway and the base station may be separately deployed. In other words, in addition to the NTN gateway, the communication system further includes a satellite base station deployed on the ground. In FIG. 5, description is provided by using an example in which the NTN gateway and the base station are separately deployed.

As shown in FIG. 6, when the satellite can implement a part or all of the functions of the base station, the satellite has a data processing capability, and the satellite may be used as a base station. In this case, the NTN gateway and the satellite may transmit user plane data of a terminal device through a satellite radio interface (satellite radio interface, SRI).

In addition, when the satellite can implement a part or all functions of the base station, as shown in FIG. 7, there is an inter-satellite link (inter-satellite link, ISL) between different satellites, and the satellites may communicate with each other through the ISL. Alternatively, as shown in FIG. 8, the satellite may have a DU processing function of the base station, or the satellite can be used as a DU. In this scenario, a CU processing function of the base station may be deployed on the ground, and the CU and the DU communicate with each other by using an F1 interface through the NTN gateway.

In the architectures shown in FIG. 5 to FIG. 8, an NG is an interface between a base station and a core network. Uu is an interface between a base station and a terminal device. Xn is an interface between base stations. It may be understood that, with evolution of a communication system, a name of an interface between a base station and a core network, a name of an interface between a base station and a terminal device, and a name of an interface between base stations may also change. This is not specifically limited in this application.

Optionally, when the satellite is used as a wireless relay node and has a relay forwarding function, it may be considered that the satellite works in a transparent (transparent) mode. If the satellite has the data processing capability and can implement a part or all of the functions of the base station, it may be considered that the satellite works in regenerative (regenerative) mode. A specific satellite may support only the transparent mode or only the regenerative mode, or may support the transparent mode and the regenerative mode, and can be switched between the transparent mode and the regenerative mode.

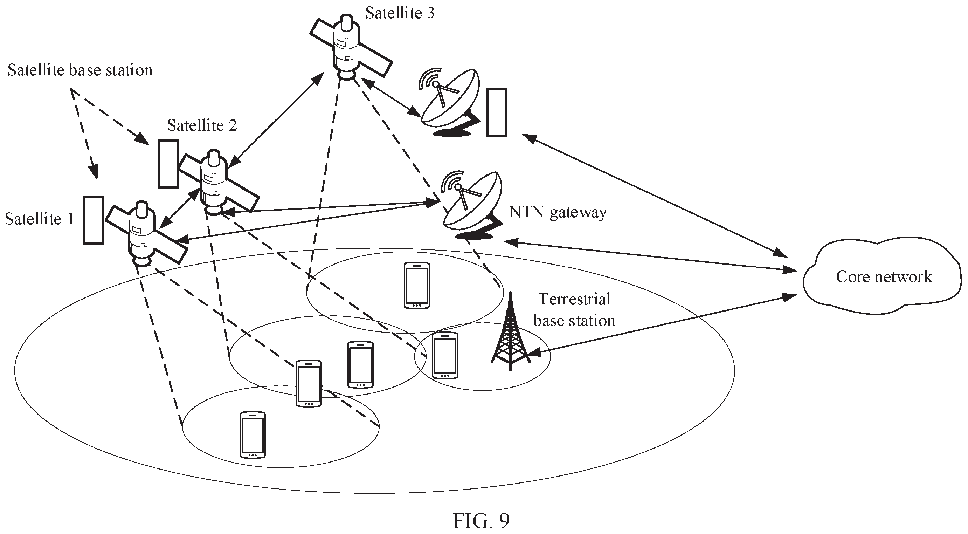

In some implementation scenarios, the NTN and the terrestrial network may be integrated. For example, FIG. 9 shows a converged network architecture of an NTN and a terrestrial network according to an embodiment of this application. In the architecture shown in FIG. 9, a satellite 1 and a satellite 2 work in a regenerative mode; and the satellite may be used as an NTN base station, in other words, the NTN base station may be deployed on the satellite. A satellite 3 works in a transparent mode. Therefore, an additional NTN base station needs to be deployed. The NTN base station indicates a base station in an NTN.

In addition, the architecture may further include a terrestrial base station, and the terrestrial base station is a base station in a terrestrial network. The NTN base station and the terrestrial base station may be interconnected by using a common core network. As a bearer network, the core network provides an interface to a data network, provides communication connection, authentication, management, and policy control for a terminal device, bears a data service, and the like. For example, the core network may include network elements such as an access and mobility management function (access and mobility management function, AMF) network element, a session management function (session management function, SMF) network element, an authentication server function (authentication server function, AUSF) network element, a policy control function (policy control function, PCF) network element, and a user plane function (User Plane Function, UPF) network element.

Alternatively, the NTN base station and the terrestrial base station may implement assistance and interconnection with higher time validity by using an interface defined between base stations. For example, an interface between base stations may be an Xn interface, and an interface between a base station and a core network may be an NG interface. Certainly, the interface between base stations and the interface between a base station and a core network may alternatively be implemented in another manner. This is not specifically limited in this application.

Optionally, in embodiments of this application, the satellite may provide a service for the terminal device by using a beam. For example, different beams may provide services for terminal devices in one or more of time division, frequency division, and spatial division. The satellite may work in the regenerative mode, or may work in the transparent mode. In addition, the satellite may work in an earth-moving mode or in an earth-fixed mode. The satellite may be an LEO satellite, an MEO satellite, a GEO satellite, or the like. This is not limited.

It may be understood that the satellites in the architectures in FIG. 5 to FIG. 9 may be replaced with terrestrial loads on other flight platforms such as an uncrewed aerial vehicle and an airplane.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

With reference to the communication systems shown in FIG. 5 to FIG. 9, the following describes the communication method provided in embodiments of this application by using interaction between network devices as an example.

It should be noted that in the following embodiments of this application, a name of a message between devices, a name of each parameter, a name of each piece of information, or the like is merely an example, and may be another name in another embodiment. This is not specifically limited in the method provided in this application.

It may be understood that an execution body in embodiments of this application may perform a part or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

In an example, in the following embodiments, the foregoing flight platform is a satellite, that is, satellite communication in the NTN is used as an example for description. Certainly, the method may also be applied to another scenario in the NTN, for example, an LAP subnetwork or an HAP subnetwork. This is not specifically limited herein.

For ease of understanding of the technical solutions in embodiments of this application, the following first briefly describes nouns related to this application.

1. Region

Unless otherwise specified, "region" in the following embodiments of this application is a geographical region. The region is fixed relative to the earth, or the region is understood as a geographical region fixed relative to the earth. For example, the region may have at least one of the following attributes: a shape, a contour, a size, a radius, an area, a geographical location, and the like.

The "region" may further have a height attribute. In other words, the region may be understood as a geographical region of a given height or a given height range. By default, the region may be a geographical region with an altitude of 0 km (km) or about 0 km (for example, within a range of [-2, 2] km) from the ground, or a geographical region with an average altitude. In addition, the geographical region may alternatively be another geographical region of another specific height or another specific height range, for example, a geographical region with an altitude of 10 km, or a geographical region with an altitude of about 10 km (for example, within a range of [7, 13] km).

In a possible implementation, the region fixed relative to the earth may also be referred to as a "beam position", a "geographical region", or the like. Certainly, the region may alternatively have another name. A name of the region fixed relative to the earth is not specifically limited in this application.

Shapes, contours, sizes, radii, and areas of different regions may be the same or may be different. Different regions have different geographical locations. Different regions may overlap or may not overlap.

In a possible implementation, that the region is fixed relative to the earth may be understood as follows: the contour, the size, or the geographical location of the region does not change. For example, the contour, the size, or the geographical location of the region does not change with time. Alternatively, the region being fixed relative to the earth may be understood as follows: The region contour and points in the region may be described by using a three-dimensional coordinate system such as an earth-centered earth-fixed (earth-centered earth-fixed, ECEF) coordinate system, a geodetic coordinate system (geodetic coordinate system), or an earth-centered inertial (earth-centered inertial, ECI) coordinate system; or coordinates of each point in the region contour in a three-dimensional coordinate system such as an ECEF, a geodetic coordinate system, or an ECI coordinate system are fixed.

In a possible implementation, the shape of the region may be a regular hexagon, or may be another shape such as a regular pentagon, a circle, or an ellipse. Alternatively, the shape of the region may be an irregular shape. This is not limited.

For example, the shape of the region may be defined in a protocol, or may be defined by the network device. Region shapes defined by different network devices may be the same or may be different. A same network device may also define a plurality of region shapes. Similarly, the size, the radius, and the area of the region may also be defined in a protocol, or may be defined by the network device. Region sizes, radii, and areas defined by different network devices may be the same or may be different. A same network device may also define a plurality of region sizes, a plurality of region radii, or a plurality of region areas.

In a possible implementation, the earth may be divided into a plurality of regions, and the plurality of regions are indexed (for example, numbered).

In a possible division manner, the geographical location of the region is determined based on an identifier of the region, that is, the geographical location of the region may be obtained based on the identifier of the region. In other words, there is an association relationship between the identifier of the region and the geographical location of the region. For example, a plurality of regions may be discretely obtained on the earth, each region corresponds to one identifier, and the geographical location of the region may be obtained based on the identifier of the region.

Further, the geographical location of the region may be further determined based on at least one of the following: a total quantity $N_{spot}$ of regions, the radius $R_{spot}$ of the region, or the earth radius $R_e$.

For example, the total quantity of regions may be understood as a total quantity of regions discretely obtained on the earth. The $N_{spot}$ regions can fully cover the earth, for example, any location on the earth belongs to a specific region; or the $N_{spot}$ regions can cover some geographical locations on the earth. For example, the $N_{spot}$ regions may not cover the south pole and/or the north pole of the earth, that is, the south pole and/or the north pole may not include the regions. $N_{spot}$ is a positive integer, for example, $N_{spot}$ = 78702.

For example, radii of the $N_{spot}$ regions may be the same, that is, a radius of each region is $R_{spot}$. When the shape of the region is a regular hexagon, the radius of the region may be a radius of a circumcircle of the regular hexagon. When the shape of the region is a circle, the radius of the region may be a radius of a circle. When the shape of the region is an ellipse, the radius of the region may include a long radius or a short radius. A unit of $R_{spot}$ may be kilometer (km), for example, $R_{spot}$ = 50 kilometers, or may be another length unit such as meter (m). This is not limited.

For example, in this embodiment of this application, the radius of the earth may be a constant, for example, a value of 6378 km. Alternatively, the earth radius may be different for different spatial-temporal location. For example, the earth radius may include an equatorial radius or a polar radius. For example, the polar radius may be used when the south pole and/or the north pole are/is divided into regions, and the equatorial radius may be used when a region other than the north pole and the south pole is divided into regions. Alternatively, when the earth is described by using an ellipsoid (that is, it is considered that a shape of the earth is an ellipsoid), the earth radius may include a major axis and a minor axis, and values of the major axis and the minor axis are different.

In a possible implementation, a total quantity of regions, a radius of a region, and the earth radius may be the same for all regions. In other words, the total quantity of regions, the radius of the region, and the earth radius may be considered as constants. In this case, it may be considered that a variable that affects a geographical location of a region is an identifier of the region.

In a possible implementation, each region includes (or has) one reference location, and the reference location may be, for example, a central location of the region. For example, the geographical location of the region may be a geographical location of a reference location in the region. In this case, the geographical location of the region is determined based on the identifier of the region. It may be understood that the reference location in the region is determined based on the identifier of the region. Alternatively, the geographical location of the region may represent the contour of the region or a range of the region. In this case, the geographical location of the reference location in the region may be determined based on the identifier of the region, and then the range or the contour of the region may be determined based on the geographical location of the reference location and the radius of the region.

In a possible implementation, an association relationship between the reference location in the region and the identifier of the region is determined according to a Fibonacci rule. In other words, the association relationship between the reference location in the region and the identifier of the region satisfies the Fibonacci rule. For example, the association relationship has the following three implementations:

Manner 1: Three-dimensional coordinates of the reference location in the region and the identifier of the region satisfy the following relationship (1):

$$RL(i) = R_e \times (\cos \varphi_i \sin \theta_i , \sin \varphi_i \sin \theta_i , \cos \theta_i) \ (1)$$

$$\varphi_i = 2\pi \left[ \frac{2i}{1 + \sqrt{5}} \right]$$

$$\theta_i = \cos^{-1} \left( 1 - \frac{2i + 1}{N_{spot}} \right), i \in \{0, \cdots, N_{spot} - 1\}$$

Herein, i represents the identifier of the region, $R_e$ indicates the earth radius, and [x] indicates a fractional part of x, for example, x = 2.3. In this case, [x] = 0.3. $N_{spot}$ indicates a total quantity of regions. RL(i) represents the three-dimensional coordinates of the reference location in the region, and the three-dimensional coordinates are coordinates in a three-dimensional coordinate system. For example, the three-dimensional coordinate system may be a spherical coordinate system, for example, an ECEF coordinate system. Certainly, the three-dimensional coordinate system may alternatively be another three-dimensional coordinate system, for example, a geodetic coordinate system (geodetic coordinate system) or an earth-centered inertial (earth-centered inertial, ECI) coordinate system.

For example, a projection $RL(x_i, y_i)$ of the reference location on a unit square and the identifier of the region satisfy the following relationship:

$$RL(x_i) = (1 - cos\theta_i)/2,$$

and

$$RL(y_i) = \varphi_i (2\pi)^{-1} = \left[ \frac{2i}{1+\sqrt{5}} \right].$$

For $\theta_i$ and $\varphi_i$, refer to the foregoing related descriptions. The unit square is a square whose vertexes are at (0, 0), (1, 0), (0, 1), and (1, 1) on a Cartesian plane. $RL(x_i)$ represents a projection metric of the reference location in an x-axis direction of the unit square, and $RL(y_i)$ represents a projection metric of the reference location in a y-axis direction of the unit square.

For example, Cartesian coordinates $RL(x_i, y_i)$ of the reference location and the identifier of the region satisfy the

following relationship:

$$RL(x_i) = i/N_{spot},$$

and

$$RL(y_i) = \left[\frac{i}{\emptyset}\right], \emptyset = \frac{1+\sqrt{5}}{2}.$$

*[x]* indicates a fractional part of *x*. $RL(x_i)$ represents a projection metric of the reference location in the region in an *x*-axis direction of a Cartesian coordinate system, and $RL(y_i)$ represents a projection metric of the reference location in the region in a *y*-axis direction of the Cartesian coordinate system. For example, the Cartesian coordinate system is a Cartesian orthogonal coordinate system.

Manner 2: Three-dimensional coordinates of the reference location in the region and the identifier of the region satisfy the following relationship (2):

$$RL(i) = R_e \times \left( \sqrt{1 - z_i^2} \cos 2\pi i \, \emptyset, \sqrt{1 - z_i^2} \sin 2\pi i \, \emptyset, z_i \right) \quad (2)$$

$$z_i = \frac{2i - 1}{N_{spot}} - 1, i \in \{1, \cdots, N_{spot}\}$$

$$\emptyset = \frac{1 + \sqrt{5}}{2}$$

For physical meanings of the parameters, refer to related descriptions in the foregoing relationship (1). Details are not described herein again.

It may be understood that the three-dimensional coordinates of the reference location shown in the relationship (1) and the relationship (2) may be equivalently converted into a longitude and latitude location. A specific representation form of the reference location is not limited in this application.

Manner 3: Longitude and latitude coordinates of the reference location in the region and the identifier of the region satisfy the following relationship (3):

$$RL(i) = (\text{lon}(i), \text{lat}(i)) \quad (3)$$

$$\text{lon}(i) = \sin^{-1}\left(\frac{2i}{2N + 1}\right), N = \frac{N_{spot} - 1}{2}$$

$$\text{lat}(i) = 2\pi i \emptyset^{-1}, i \in \{1, \cdots, N_{spot}\}, \emptyset = \frac{1 + \sqrt{5}}{2}$$

$RL(i)$ represents the longitude and latitude coordinates of the reference location, for example, *lon(i)* represents longitude of the reference location, and lat(*i*) represents latitude of the reference location. $N_{spot}$ indicates a total quantity of regions.

It may be understood that the longitude and latitude coordinates of the reference location shown in the relationship (3) may be equivalently converted into three-dimensional coordinates. A specific representation form of the reference location is not limited in this application.

In a possible implementation, the radius of the region and the total quantity of regions satisfy the following relationship (4):

$$N_{spot} = \frac{8\pi R_e^2}{3\sqrt{3}R_{spot}^2} \quad (4)$$

$R_e$ represents the earth radius, $N_{spot}$ represents the total quantity of regions, and $R_{spot}$ represents the radius of the region. For explanations of the parameters, refer to the foregoing related descriptions. Details are not described herein again.

Based on the foregoing region division manner, in one aspect, coordinates of a reference location in a region can be quickly and accurately determined based on an identifier of the region, so that a contour, a geographical location, and the like of the region can be quickly and accurately determined. In another aspect, a radius of the region can be flexibly adjusted to adapt to different load capabilities, for example, to adapt to different beam radii. In still another aspect, because the geographical location of the region can be determined based on the identifier of the region, information exchange may be performed between network devices based on the identifier of the region, to indicate conditions such as coverage regions and service regions of the network devices. This design can significantly reduce signaling overheads compared with directly exchanging information such as a beam reference point and a beam coverage region contour for interference management. Unlike a manner of performing division based on an H3 geographical grid, because a total quantity of regions is relatively small, a quantity of bits required for indicating a region identifier is also relatively small, thereby reducing signaling overheads.

2. Coverage region of a network device

The coverage region of the network device may be a largest region that is coverable by the network device. In other words, the coverage region of the network device indicates (or reflects) a maximum coverage capability of a first network device.

The coverage region of the network device varies with movement of the network device. In other words, coverage regions of the network device may be different at different moments. The coverage region of the network device includes at least one of the foregoing regions (that is, beam positions).

The coverage region of the network device changes with movement of the network device, and a region (beam position) is fixed relative to the earth. Therefore, beam positions included in the coverage region of the network device may be different at different moments.

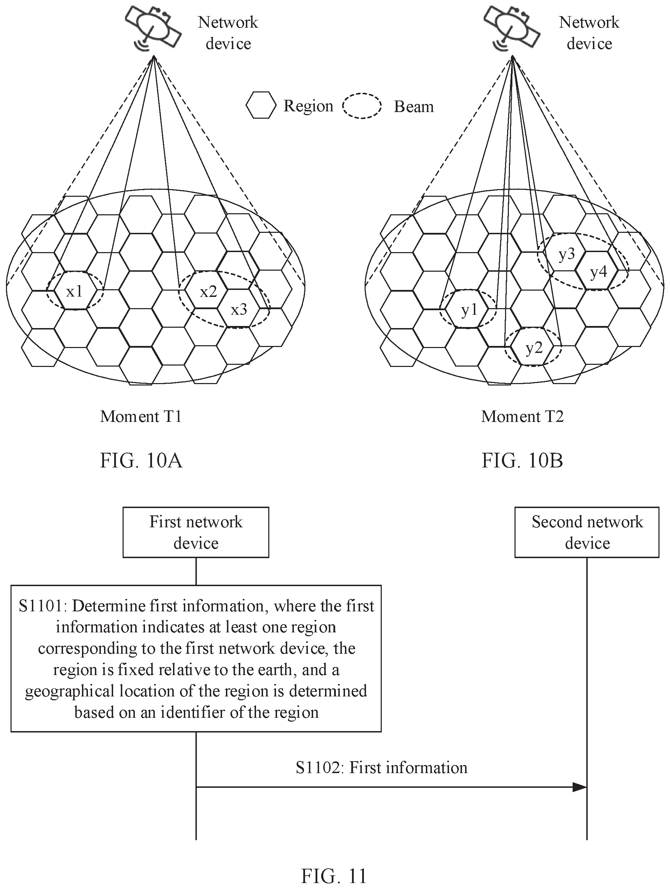

For example, the shape of the region is a regular hexagon. As shown in FIG. 10A and FIG. 10B, a solid line of an ellipse may represent the coverage region of the network device. Regions represented by all regular hexagons in a solid-line ellipse are regions included in the coverage region of the network device.

3. Service region of a network device

The service region of the network device may be a largest region that can be served (or covered) by a beam of the network device. In other words, the service region of the network device indicates (or reflects) a maximum service capability of a first network device.

The service region of the network device is less than or equal to the coverage region of the network device. For example, based on the example shown in FIG. 10A and FIG. 10B, the service region of the first network device may be a range represented by a solid-line ellipse. In this case, the service region of the first network device is equal to the coverage region of the first network device; or the service region of the first network device may be less than the range represented by the solid-line ellipse.

The service region of the network device varies with movement of the network device. In other words, service regions of the network device may be different at different moments. The service region of the network device includes at least one of the foregoing regions (that is, beam positions).

The service region of the network device changes with movement of the network device, and a region (beam position) is fixed relative to the earth. Therefore, beam positions included in the service region of the network device may be different at different moments.

In addition, at a specific moment, the beam of the network device may actually serve (or cover) a part of regions in the service region; and at different moments, the beam of the network device may serve (or cover) different regions in the service region, for example, regions x1, x2, and x3 in the beam service region of the network device at a moment T1 shown in FIG. 10A, and regions y1, y2, y3, and y4 in the beam service region of the network device at a moment T2 shown in FIG. 10B.

4. Active region of a network device

A region that is currently served (or covered) by the beam of the network device may be referred to as an active region or an activated region. A region that is currently not served (or covered) by the beam of the network device may be referred to as an inactive region or an unactivated region.

The following describes the communication method provided in embodiments of this application. FIG. 11 is a flowchart of a communication method according to an embodiment of this application. The communication method may include the following steps.

S1101: A first network device determines first information.

The first information indicates at least one region corresponding to the first network device. The region is fixed relative to the earth. A geographical location of the region is determined based on an identifier of the region. Refer to the foregoing related description of the region. Details are not described herein again.

In some implementations, the at least one region corresponding to the first network device may have the following three cases:

Case 1: The at least one region corresponding to the first network device is a region in a coverage region of the first network device. Alternatively, the at least one region corresponding to the first network device is a region in a service region of the first network device.

For example, the at least one region may be all regions in the coverage region of the first network device, and the at least one region may form a coverage beam position set. Alternatively, the at least one region may be all regions in the service region of the first network device, and the at least one region may form a service beam position set.

Optionally, because the coverage region or the service region of the first network device may be different at different moments, regions included in the coverage region or the service region at different moments are also different. Therefore, that the first information indicates the region in the coverage region or the service region of the first network device may be understood as that the first information indicates a region in a coverage region or a service region of the first network device at a current moment. When the coverage region or the service region of the first network device changes, the first network device may indicate a region in a changed or an updated coverage region or service region to the second network device.

For example, the first network device may perform indication in a full update manner or an incremental update manner. For example, when the full update manner is used, the first network device may indicate, to the second network device, all regions in the updated coverage region or service region; and when the incremental update manner is used, the first network device may indicate, to the second network device, a region newly added to and a region deleted from the updated coverage region or service region when the updated coverage region or service region is compared with the original coverage region or service region.

Alternatively, the first information may indicate the region in the coverage region or the service region of the first network device in a plurality of time periods. For example, the first information may include {time period 1, beam position set 1}, {time period 2, beam position set 2}, and {time period 3, beam position set 3}, to indicate that in the time period 1, the coverage region or the service region of the first network device includes the beam position set 1; in the time period 2, the coverage region or the service region of the first network device includes the beam position set 2; and in the time period 3, the coverage region or the service region of the first network device includes the beam position set 3.

Case 2: The at least one region corresponding to the first network device is a region served (or covered) by a beam of the first network device. For example, the at least one region may be all regions served by the beam of the first network device.

Optionally, the region served (or covered) by the beam of the first network device may be understood as a region that is being or to be served (or covered) by the beam of the first network device.

For example, based on an example shown in FIG. 10A and FIG. 10B, at a moment T1, regions served by the beam of the first network device are regions x1, x2, and x3; and at a moment T2, regions served by the beam of the first network device are regions y1, y2, y3, and y4.

Optionally, that the first information indicates the region served by the beam of the first network device may be understood as that the first information indicates a region currently served by the beam of the first network device, that is, the first information indicates a current active region. When the region served by the beam of the first network device changes, the first network device may send a changed region served by the beam of the first network device to the second network device. The first network device may perform indication in the full update manner or the incremental update manner. For details, refer to related descriptions in a form 1. Details are not described herein.

Alternatively, the first information may indicate the region served by the beam of the first network device in a plurality of time periods. For example, the first information may include {time period 1, service beam position set 1}, {time period 2, service beam position set 2}, and {time period 3, service beam position set 3}, to indicate that in the time period 1, the region served by the beam of the first network device includes the beam position set 1; in the time period 2, the region served by the beam of the first network device includes the beam position set 2; and in the time period 3, the region served by the beam of the first network device includes the beam position set 3.

Case 3: The at least one region corresponding to the first network device is a region that is uncoverable by the first network device.

In a possible implementation, the region that is uncoverable by the first network device may be understood as a region that is covered or served by the first network device with a remaining time less than a first threshold, a region that does not belong to the coverage region or the service region of the first network device, or a region that needs to be covered by another network device instead. The region that is uncoverable by the first network device may also be referred to as a to-be-switched region.

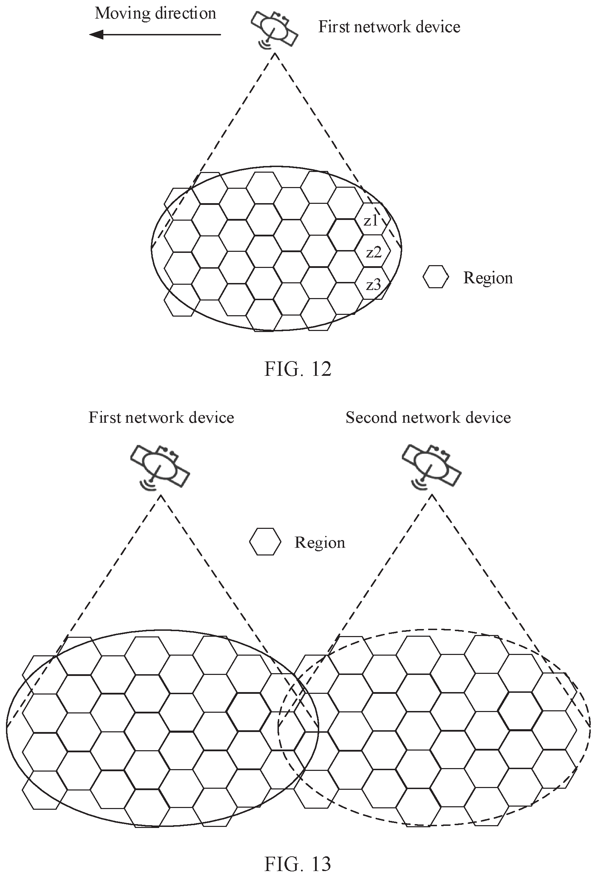

For example, as shown in FIG. 12, an example in which the first network device moves leftwards is used. It is assumed that the coverage region of the first network device at a moment T1 is shown by using a solid-line ellipse in FIG. 12. In this case, as the first network device moves, regions z1, z2, and z3 are uncoverable by the first network device.

S1102: The first network device sends first information to a second network device. Correspondingly, the second network device receives the first information from the first network device.

In a possible implementation, the first network device and the second network device each are a device that is deployed on a satellite and has a part or all of base station functions. In this scenario, there may be an inter-satellite link between the first network device and the second network device, and the first network device may send the first information to the second network device through the inter-satellite link and/or a satellite-to-earth link (for example, a link between a satellite and a terrestrial station (for example, a core network element)).

In another possible implementation, the first network device may be a device that is deployed on a satellite and that has a part or all of base station functions, and the second network device may be a device that is deployed on a satellite and that works in a transparent mode. In this scenario, the first network device may send the first information to the second network device through a feeder link; or the first network device may send the first information to a core network through an NG interface, and then the core network sends the first information to a satellite base station corresponding to the second network device.

In still another possible implementation, the first network device may be a satellite base station deployed on the ground. In this case, the coverage region/service region of the first network device may be understood as a coverage region/service region of a satellite that is connected to the first network device and that works in a transparent mode. Alternatively, the second network device may be a satellite base station deployed on the ground. In this scenario, the first network device may send the first information to the second network device by reusing an Xn or X2 interface.

In still another possible implementation, the first network device may be a satellite base station deployed on the ground, and the second network device may be a device that is deployed on a satellite and that has a part or all of base station functions. In this scenario, the first network device may send the first information to a core network through an NG interface, and then the core network sends the first information to the second network device.

In a possible implementation, after receiving the first information, the second network device may determine, based on the first information, the coverage region of the first network device, the service region of the first network device, or the region served by the beam of the first network device, to perform interference management based on obtained region information.

In some implementations, the second network device may send second information to the first network device. The second information indicates at least one region corresponding to the second network device. For the at least one region corresponding to the second network device, refer to related descriptions of the at least one region corresponding to the first network device. For implementation of the second information, refer to implementation of the first information. Details are not described herein again.

Based on the foregoing solution, the ground may be discrete into some regions that are fixed relative to the earth, and geographical locations of the regions may be determined based on identifiers of the regions. Therefore, information exchange may be performed between network devices based on the identifier of the region, to indicate conditions such as coverage regions and service regions of the network devices. After a specific network device receives information of another network device, because the identifier of the region may determine the geographical location of the region, the network device may learn of a coverage region and a service region of the another network device and the like based on the identifier of the region, and then perform interference management based on the learned information. This can reduce signaling overheads compared with directly exchanging information such as a contour of a region for interference management.

The foregoing describes an entire procedure of the communication method provided in this application. The following separately describes in detail the corresponding first information in the foregoing three cases.

Case 1: When the at least one region corresponding to the first network device is the region in the coverage region or the service region of the first network device, the first information may be implemented in the following three forms: Form 1: The first information includes the identifier of each of the at least one region corresponding to the first network device. In other words, the first information includes the identifier of each region in the coverage region or the service region of the first network device.

For example, the coverage region and the service region of the first network device are the same. As shown in FIG. 13, a solid-line ellipse represents the coverage region or the service region of the first network device, and the at least one region corresponding to the first network device is regions represented by all regular hexagons in the solid-line ellipse. In addition, a dashed-line ellipse may represent a coverage region or a service region of the second network device, and the at least one region corresponding to the second network device may be regions represented by all regular hexagons in the dashed-line ellipse. It can be learned that the coverage regions or the service regions of the first network device and the second network device may overlap.

For example, the coverage region or the service region of the first network device includes regions whose identifiers are 1 to 100, and the coverage region or the service region of the second network device includes regions whose identifiers are 80 to 150. The first information may include {1,2, ··· ,100}, and the second information may include {80,81,... ,150}.

Optionally, after receiving the first information implemented in the form 1, the second network device may determine a reference location in each region based on an identifier of the region, a total quantity of regions (or a region radius), and the earth radius according to one or more of the relationship (1) to the relationship (3), to determine a contour or a range of the region based on the region radius and the reference location.

Optionally, the first network device further sends the total quantity of regions and/or the radius of the region to the second network device. The total quantity of regions and/or the radius of the region that are/is sent by the first network device may be understood as a total quantity of regions in which the first network device takes effect or that are served by the first network device, and/or the radius of the region. Total quantities of regions in which the first network device and the second network device take effect or that are served by the first network device, and/or region radii may be the same or may be different. This is not limited.

When the total quantities of regions in which the first network device and the second network device take effect, and/or the region radii are different, it indicates that the first network device and the second network device have different region division. However, both the identifier of the region and the geographical location of the region satisfy the relationship described in step S1101. Based on the form 1, the first network device sends the identifier of the region in the coverage beam position set or the service beam position set to the second network device. This can reduce signaling overheads compared with sending contour information or location coordinate information of the region in the coverage beam position set or the service beam position set.

Form 2: The first information includes an identifier of a first region and a first threshold.

In a first possible implementation, a distance between a reference location in each region in the coverage region or the service region of the first network device and a reference location in the first region is less than or equal to the first threshold.

Optionally, after receiving the first information, the second network device may determine the reference location in the first region based on the identifier (for example, 50) of the first region. Then, the second network device may traverse identifiers of regions, calculate a reference location corresponding to each identifier, and determine, as the identifier of the region in the coverage region or the service region of the first network device, an identifier whose distance between a corresponding reference location and the reference location in the first region is less than or equal to the first threshold (for example, 2000 km).

In a second possible implementation, a difference between the identifier of each region in the coverage region or the service region of the first network device and the identifier of the first region is less than or equal to the first threshold. It may be understood that a value of the first threshold in the second possible implementation is different from that in a possible implementation. For example, the first threshold is 2000 km in the first possible implementation, and the first threshold is 50 in the second possible implementation.

Optionally, after receiving the first information, the second network device may traverse identifiers of regions, calculate a difference between each identifier and the identifier of the first region, and determine, as the identifier of the region in the coverage region or the service region of the first network device, an identifier whose difference with the identifier of the first region is less than or equal to the first threshold.

For example, in the foregoing two possible implementations, the second network device may traverse region identifiers from 1 to $N_{spot}$ or from 0 to $N_{spot}$ - 1. Alternatively, the second network device may traverse identifiers in a specific identifier range, for example, traverse region identifiers in a range $[a - C, a + C]$. $a$ represents the identifier of the first region, and $2C$ may represent a maximum quantity of regions in the coverage region or the service region of the network device.

Form 3: The first information includes a first elevation angle.

In a possible implementation, the first elevation angle may be understood as a minimum elevation angle corresponding to the first network device. An elevation angle at a reference location in each region in the coverage region or the service region of the first network device is greater than or equal to the first elevation angle.

For example, for a specific location on the earth, when a line of sight is above a horizontal line, an included angle between the line of sight and the horizontal line on a vertical plane including the line of sight may be understood as an elevation angle. In the form 3, the elevation angle at the reference location may be understood as an included angle between a horizon at the reference location, and a connection line between the reference location and a location of the first network device. The elevation angle at the reference location may be used to describe a location that is above the reference location and through which the first network device passes. For example, if the elevation angle at the reference location is 90°, it indicates that the first network device is located right above the reference location.

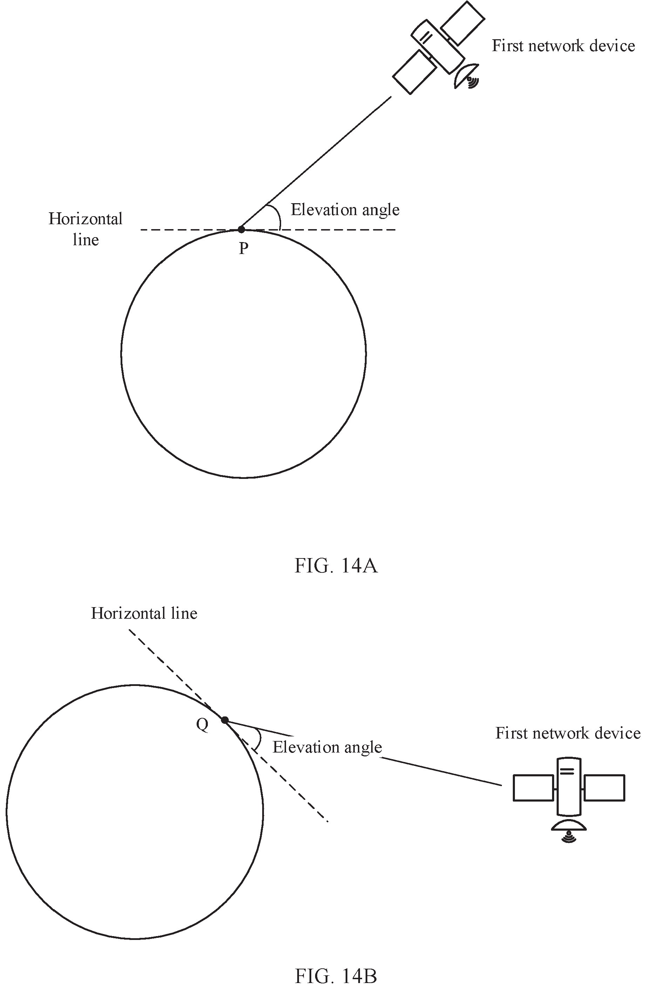

An elevation angle of a reference location being at a point P is shown in FIG. 14A. An elevation angle of a reference location being at a point Q is shown in FIG. 14B.

Optionally, after receiving the first information, the second network device may traverse the identifiers of the regions, calculate a reference location corresponding to each identifier and an elevation angle at the reference location (the included angle between the horizon at the reference location, and the connection line between the reference location and the location of the first network device), and determine, as the identifier of the region in the coverage region or the service region of the first network device, an identifier corresponding to a reference location at which an elevation angle is greater than or equal to the first elevation angle. For implementation in which the second network device traverses the identifiers of the regions, refer to related descriptions in the foregoing form 2. Details are not described herein again.

For example, the location of the first network device is determined based on ephemeris information of the first network device. The first network device may send the ephemeris information of the first network device to the second network device. The first network device further sends the total quantity of regions and/or the radius of the region to the second network device. Refer to the foregoing related description of the form 1. Details are not described herein again.

In a possible implementation, the first information may also include angle information such as an antenna steering angle and an azimuth, that is, the region in the coverage region or the service region of the first network device is indicated by using the angle information such as the antenna steering angle and the azimuth.

In the foregoing three forms, it may be considered that the at least one region corresponding to the first network device is indicated in a granularity of a network device. Generally, the network device may include one or more cells, or may indicate the at least one region corresponding to the first network device in a granularity of a cell. Regions corresponding to different cells may overlap or may not overlap. In addition, region identifiers corresponding to different cells may be consecutive or inconsecutive.

For example, the first network device includes three cells. The first information in the foregoing form 1 may include $PCI\_1\{i\} = \{1,2,...,47\}$, $PCI\_2\{i\} = \{44,45,\cdots,75\}$, and $PCI\_3\{i\} = \{70,74,76\cdots,100\}$, to respectively indicate that an identifier of at least one region corresponding to a cell 1 is $\{1,2,\cdots,47\}$, an identifier of at least one region corresponding to a cell 2 is $\{44,45,\cdots,75\}$, and an identifier of at least one region corresponding to a cell 3 is $\{70,74,76\cdots,100\}$. Alternatively, in the foregoing form 2, the first information may include identifiers of a plurality of first regions and a plurality of first thresholds that are separately corresponding to a plurality of cells of the first network device. Alternatively, in the foregoing form 3, the first information may include information about minimum elevation angles respectively corresponding to a plurality of cells of the first network device.

Case 2: The at least one region corresponding to the first network device is a region served (or covered) by a beam of the first network device. In other words, when the at least one region corresponding to the first network device is an active region of the first network device, the first information may be implemented in the following three forms:

Form A: The first information includes the identifier of each of the at least one region corresponding to the first network device. In other words, the first information includes an identifier of a region served by a beam of the first network device, or includes an identifier of each active region of the first network device.

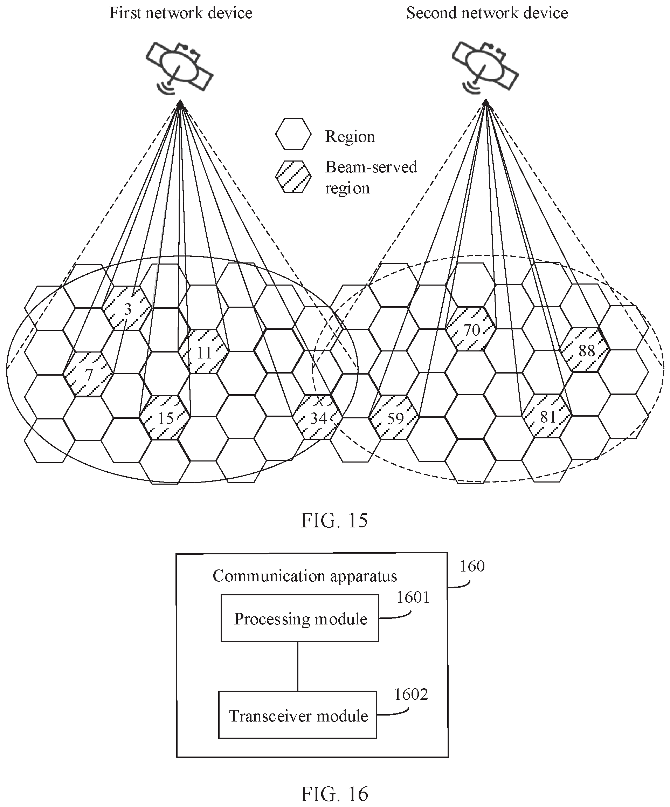

For example, the coverage region and the service region of the first network device are the same. As shown in FIG. 15, a solid-line ellipse represents the coverage region or the service region of the first network device, and an identifier of a region included in the coverage region or the service region is $\{1,2,...,40\}$; and a dashed-line ellipse represents the coverage region or the service region of the second network device, and an identifier of a region included in the coverage region or the service region is $\{35,36,\cdots,90\}$. If regions served by a beam of the first network device are a region 3, a region 7, a region 11, a region 15, and a region 34, the first information may include $\{3, 7, 11, 15, 43\}$. If regions served by a beam of the second network device are a region 59, a region 70, a region 81, and a region 88, the second information sent by the second network device to the first network device may include $\{59, 70, 81, 88\}$.

Optionally, after receiving the first information implemented in the form A, the second network device may determine a reference location in each region based on an identifier of the region, a total quantity of regions (or a region radius), and the earth radius according to one or more of the relationship (1) to the relationship (3), to determine a contour or a range of the region based on the region radius and the reference location.

Optionally, the first network device further sends the total quantity of regions and/or the radius of the region to the second network device. Refer to the foregoing related description of the form 1. Details are not described herein again.

Form B: The first information is a bitmap, the bitmap includes M bits, M is a total quantity of regions included in the coverage region or the service region of the first network device, and M is a positive integer.

The M bits are in a one-to-one correspondence with M regions included in the coverage region or the service region of the first network device. When an $m^{th}$ bit is set to a preset value, a region corresponding to the $m^{th}$ bit is a region served by a beam of the first network device. In other words, the region corresponding to the $m^{th}$ bit is an active region.

When the mth bit is not set to a preset value, the region corresponding to the mth bit is not a region served by a beam of the first network device. In other words, the region corresponding to the mth bit is not an active region. $m = 1,2,\cdots,M.$

In the form B, the first network device may indicate, to the second network device by using the foregoing form 1, the region included in the coverage region or the service region of the first network device, and then indicate, with reference to the first information implemented by using the form B, the region served by the beam of the first network device.

For example, the preset value may be 1, and correspondingly, a non-preset value may be 0; or the preset value may be 0, and correspondingly, a non-preset value may be 1.

For example, the preset value is equal to 1. Based on the example shown in FIG. 15, M is equal to 40, and 40 bits in the bitmap respectively correspond to a region 1 to a region 40. When regions served by a beam of the first network device are a region 3, a region 7, a region 11, a region 15, and a region 34, bits corresponding to the region 3, the region 7, the region 11, the region 15, and the region 34 are set to 1, and bits corresponding to other regions are set to 0.

For the second network device, based on the example shown in FIG. 15, M is equal to 55, and 55 bits in the bitmap respectively correspond to a region 35 to a region 90. When regions served by a beam of the second network device are a region 59, a region 70, a region 81, and a region 88, bits corresponding to the region 59, the region 70, the region 81, and the region 88 are set to 1, and bits corresponding to other regions are set to 0. Certainly, the second network device also needs to indicate, to the first network device in the foregoing form 1, the region included in the coverage region or the service region of the second network device.

Optionally, after receiving the first information implemented in the form B, the second network device may determine an identifier of a region served by a beam of the first network device, and then determine a reference location in each region based on the identifier of the region, a total quantity of regions (or a region radius), and the earth radius according to one or more of the relationship (1) to the relationship (3), to determine a contour or a range of the region based on the region radius and the reference location.

Optionally, the first network device further sends the total quantity of regions and/or the radius of the region to the second network device. Refer to the foregoing related description of the form 1. Details are not described herein again.

Form C: The first information includes an index of a region served by a beam of the first network device in a region set, and the region set includes a region included in the coverage region or the service region of the first network device.

For example, regions in the region set may be numbered from 1 or from 0. For example, identifiers of regions in the region set are {20,21,···,50}, and the regions in the region set may be respectively numbered as {1,2,···,30}. If the first information includes {1,2}, it indicates that regions served by a beam of the first network device are a region 20 and a region 21.

Based on the example shown in FIG. 15, for the first network device, identifiers of regions in the region set are {1,2,...,40}, and the regions in the region set may be respectively numbered as {1,2,...,40}. If the first information includes {1,2}, it indicates that regions served by a beam of the first network device are a region 1 and a region 2.

For the second network device, identifiers of regions in the region set are {35,36,···,90}, and the regions in the region set may be respectively numbered as {1,2,...,55}. If the second information sent by the second network device to the first network device includes {1,2}, it indicates that regions served by a beam of the second network device are a region 35 and a region 36.

In the form C, the first network device may indicate, to the second network device by using the foregoing form 1, the region included in the coverage region or the service region of the first network device, and then indicate, with reference to the first information implemented by using the form C, the region served by the beam of the first network device. The second network device also needs to indicate, to the first network device in the foregoing form 1, the region included in the coverage region or the service region of the second network device.

Optionally, after receiving the first information implemented in the form C, the second network device may determine an identifier of a region served by a beam of the first network device, and then determine a reference location in each region based on the identifier of the region, a total quantity of regions (or a region radius), and the earth radius according to one or more of the relationship (1) to the relationship (3), to determine a contour or a range of the region based on the region radius and the reference location.

Optionally, the first network device further sends the total quantity of regions and/or the radius of the region to the second network device. Refer to the foregoing related description of the form 1. Details are not described herein again.

In the foregoing case 2, in addition to the first information, the first network device may further send, to the second network device, at least one piece of the following information of the region served by the beam of the first network device: a service periodicity, a service duration, a frequency, polarization information, or a service time.

For example, the service periodicity of the region is a periodicity in which the region is served by the beam of the network device. For example, if the service periodicity is 20 seconds (s), it indicates that the region is served once every 20s.

The service duration is a duration in which the region is continuously served by the beam of the network device in a service periodicity. For example, if the service periodicity is 20s and the service duration is 10s, it indicates that the region is served once every 20s, and each service duration is 10s.

The frequency is a frequency used for communication in the region served by the beam of the network device. The polarization information indicates an antenna polarization direction used when the beam of the network device serves the region, and the like.

The service time indicates a specific time point at which the beam of the network device serves the region. For example, when a specific region is served once every 20s, and each service duration is 10s, the service time indicates specific 10s in the service periodicity as service 10s. For example, the service time is first 10s, or last 10s, or discrete 10s (for example, the 1st second, the 3rd second, the 5th second, ..., the 17th second, and the 19th second) in the service periodicity.

Based on the foregoing information, the second network device can learn of information such as a service periodicity, a service time, and a frequency of an active region corresponding to the first network device, so that the second network device can learn of more detailed information related to the active region, thereby facilitating more refined interference management performed by the second network device and improving interference management performance.

Case 3: When the at least one region corresponding to the first network device is a region that is uncoverable by the first network device, the first information may be implemented in the following four forms:

Form a: The first information includes an identifier of each region that is uncoverable by the first network device.

For example, the coverage region or the service region of the first network device includes regions whose identifiers are {1,2, ··· ,100}. If a region 95 to a region 100 cannot be used by the first network device at a current moment, the first information may include {95,96 ··· ,100}.

Form b: The first information includes an identifier of a first region and a first threshold.

Implementation of the form b is similar to implementation of the form 2 in the foregoing case 1. A difference lies in that first region in the form b and the first region in the form 2 may not be a same region, and the first threshold in the form b and the first threshold in the form 2 may also be different. Refer to the foregoing related description of the form 2. Details are not described herein again.

Form c: The first information is a bitmap, the bitmap includes M bits, M is a total quantity of regions included in the coverage region or the service region of the first network device, and M is a positive integer.

The M bits are in a one-to-one correspondence with M regions included in the coverage region or the service region of the first network device. When an $m^{th}$ bit is set to a preset value, a region corresponding to the $m^{th}$ bit is a region that is uncoverable by the first network device. Refer to the related description of the form B in the foregoing case 2. Details are not described herein again.

Form d: The first information includes an index of a region that cannot be served by a beam of the first network device in a region set, and the region set includes a region included in the coverage region or the service region of the first network device. Refer to the related description of the form C in the foregoing case 2. Details are not described herein again.

Form e: The first information includes a second elevation angle.

In a possible implementation, the second elevation angle is greater than the first elevation angle, and a difference between the second elevation angle and the first elevation angle is less than or equal to a second threshold. The first elevation angle is a minimum elevation angle corresponding to the first network device. An elevation angle at a reference location in each region in the coverage region or the service region of the first network device is greater than or equal to the first elevation angle. The second threshold may be a relatively small value, for example, 2° or 5°.

An elevation angle at a reference location in the region that is uncoverable by the first network device is less than or equal to the second elevation angle. Further, the elevation angle at the reference location in the region is greater than or equal to the first elevation angle. In other words, the elevation angle of the region that is uncoverable by the first network device is slightly greater than the minimum elevation angle corresponding to the first network device.

Optionally, after receiving the first information, the second network device may traverse the identifiers of the regions, calculate a reference location corresponding to each identifier and an elevation angle at the reference location (the included angle between the horizon at the reference location, and the connection line between the reference location and the location of the first network device), and determine, as the identifier of the region that is uncoverable by the first network device, an identifier corresponding to a reference location at which an elevation angle is less than or equal to the second elevation angle. For implementation in which the second network device traverses the identifiers of the regions, refer to related descriptions in the foregoing form 2. Details are not described herein again.

For example, the location of the first network device is determined based on ephemeris information of the first network device. The first network device may send the ephemeris information of the first network device to the second network device.

In another possible implementation, the second elevation angle is the same as the first elevation angle. In this case, a difference between the second elevation angle and the elevation angle at the reference location in the region that is uncoverable by the first network device is less than or equal to the second threshold.

Optionally, after receiving the first information, the second network device may traverse the identifiers of the regions, calculate a reference location corresponding to each identifier and an elevation angle at the reference location (the included angle between the horizon at the reference location, and the connection line between the reference location and the location of the first network device), and determine, as the identifier of the region that is uncoverable by the first network device, an identifier corresponding to a reference location at which an elevation angle has a difference less than or equal to the second threshold from the second elevation angle. For implementation in which the second network device traverses the identifiers of the regions, refer to related descriptions in the foregoing form 2. Details are not described herein again.

In a possible implementation, the first information may also include angle information such as an antenna steering angle and an azimuth, that is, the region that is uncoverable by the first network device is indicated by using the angle information such as the antenna steering angle and the azimuth.

In the form a to the form e above, the first network device further sends the total quantity of regions and/or the radius of the region to the second network device. Refer to the foregoing related description of the form 1. Details are not described herein again.

Optionally, in the form a to the form e above, after receiving the first information, the second network device may determine, based on the first information, the identifier of the region that is uncoverable by the first network device, to determine a geographical location of the region based on one or more of the relationship (1) to the relationship (3) above. Subsequently, a beam direction of the second network device may be adjusted based on the geographical location of the region, to replace the first network device to cover or serve the region.

In the foregoing case 3, in addition to the first information, the first network device may further send, to the second network device, resource information and/or time information associated with the region that is uncoverable by the first network device.

In a possible implementation, the resource information includes at least one of the following: a service periodicity, a service duration, a frequency, or polarization information. Refer to the related description of the foregoing case 2. Details are not described herein again.

In a possible implementation, the time information indicates a time at which a target network device starts to cover a to-be-switched region (that is, the region that is uncoverable by the first network device) and/or the latest time at which the target network device covers the to-be-switched region.

Optionally, the target network device may be the second network device, or may be another network device. If the second network device determines a geographical location of the to-be-switched region based on the first information, and determines that the second network device can cover the to-be-switched region, the second network device may serve as the target network device.

Optionally, the time at which the target network device starts to cover the to-be-switched region may indicate a time at which the target network device needs to start to cover the to-be-switched region. The latest time at which the target network device covers the to-be-switched region may be understood as the latest time at which the target network device fully covers the to-be-switched region, that is, the latest time before which the target network device needs to fully cover the to-be-switched region.

In a first example, the time information may include a start time and an end time. The start time is a time at which the target network device starts to cover the to-be-switched region, and the end time is the latest time at which the target network device covers the to-be-switched region.

In a second example, the time information may include a start time and a time offset. A duration between the start time and the end time is the time offset. In other words, the end time may be determined based on the start time and the time offset.

In a third example, the time information may indicate a time at which the target network device starts to cover the to-be-switched region, and the time information may be the first information. In this case, when the target network device is the second network device, the time at which the target network device starts to cover the to-be-switched region may be a time at which the second network device receives the first information.

In a fourth example, the time information may be a magnitude of a third elevation angle. In this case, the time information indicates the time at which the target network device starts to cover the to-be-switched region, and the time at which the target network device starts to cover the to-be-switched region is a time at which an elevation angle at a reference location in the to-be-switched region (for example, an included angle between a horizon at the reference location, and a connection line between the reference location and the location of the first network device) is equal to the third elevation angle.

Optionally, after the second network device receives resource information associated with the to-be-switched region, if the second network device can serve as the target network device, the second network device may cover or serve the region based on a time domain resource or a frequency domain resource indicated by the resource information associated with the to-be-switched region. For example, the second network device still covers or serves the to-be-switched region based on the service periodicity, the service duration, the service time, and the like of the region; and/or the second network device covers or serves the region based on the frequency and/or the polarization direction indicated by the resource information.

After receiving the time information associated with the to-be-switched region, the second network device may cover or serve the to-be-switched region based on the start time and/or the end time indicated by the time information. For example, the second network device starts to cover the to-be-switched region at the start time, and completes fully covering the to-be-switched region at the end time.

In addition, the second network device may further request, from the first network device, context information, data, and the like of a terminal device in the to-be-switched region, so that the terminal device communicates with the terminal device after the terminal device is handed over to the second network device. The second network device may further reserve a resource for the terminal device in the to-be-switched region, to communicate with the terminal device.

Based on the foregoing information, the second network device can learn of the resource information and/or the time information associated with the to-be-switched region, so that the second network device can cover or serve the to-be-switched region based on the resource information and/or the time information, thereby improving coverage or service continuity of the to-be-switched region and improving service quality of the terminal device in the to-be-switched region.

It may be understood that in the foregoing embodiments, the methods and/or steps implemented by the network device may be alternatively implemented by a component (for example, a processor, a chip, a chip system, a circuit, a logical module, or software) that may be used in the network device. The chip system may include a chip, or the chip system may include a chip and another discrete device.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

For a communication apparatus, FIG. 16 is a diagram of a structure of a communication apparatus 160. The communication apparatus 160 includes a processing module 1601 and a transceiver module 1602. The communication apparatus 160 may be configured to implement functions of the network device.

In some embodiments, the communication apparatus 160 may further include a storage module (not shown in FIG. 16), configured to store program instructions and data.

In some embodiments, the transceiver module 1602 may also be referred to as a transceiver unit, and is configured to implement a sending function and/or a receiving function. The transceiver module 1602 may include a transceiver circuit, a transceiver machine, a transceiver, or a communication interface.

In some embodiments, the transceiver module 1602 may include a receiving module and a sending module that are respectively configured to perform the receiving and sending steps performed by the network device in the foregoing method embodiments, and/or configured to support another process of the technology described in this specification. The processing module 1601 may be configured to perform the processing (for example, determining) steps performed by the network device in the foregoing method embodiments, and/or configured to support another process of the technology described in this specification.

For example, the communication apparatus 160 is configured to implement functions of the first network device.

The processing module 1601 is configured to determine first information, where the first information indicates at least one region corresponding to the first network device, the region is fixed relative to the earth, and a geographical location of the region is determined based on an identifier of the region. The transceiver module 1602 is configured to send the first information to a second network device.

Optionally, the geographical location of the region is further determined based on at least one of the following: a radius of the region, an earth radius, and a total quantity of regions.

Optionally, the transceiver module 1602 is further configured to send, to the second network device, at least one piece of the following information of the at least one region corresponding to the first network device: a service periodicity, a service duration, a frequency, polarization information, or a service time.

Optionally, the transceiver module 1602 is further configured to send, to the second network device, resource information and/or time information associated with the at least one region corresponding to the first network device. The resource information includes at least one of the following: a service periodicity, a service duration, a frequency, or polarization information, and the time information indicates a time at which a target network device starts to cover the at least one region and/or the latest time at which the target network device covers the at least one region.

All related content of the steps in the foregoing method embodiments may be cited in function descriptions of the corresponding functional modules. Details are not described herein again.

In this application, the communication apparatus 160 may be presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 160 in FIG. 16 is a chip or a chip system, a function/an implementation process of the transceiver module 1602 may be implemented by using an input/output interface (or a communication interface) of the chip or the chip system, and a function/an implementation process of the processing module 1601 may be implemented by using a processor (or a processing circuit) of the chip or the chip system.

The communication apparatus 160 provided in this embodiment may perform the foregoing methods. Therefore, for technical effect that can be achieved by the communication apparatus 160, refer to the foregoing method embodiments. Details are not described herein again.

In a possible product form, the network device in embodiments of this application may be implemented by using one or more field programmable gate arrays (field programmable gate array, FPGA), a programmable logic device (programmable logic device, PLD), a controller, a state machine, a gate logic, a discrete hardware component, any other appropriate circuit, or any combination of circuits that can perform various functions described in this application.

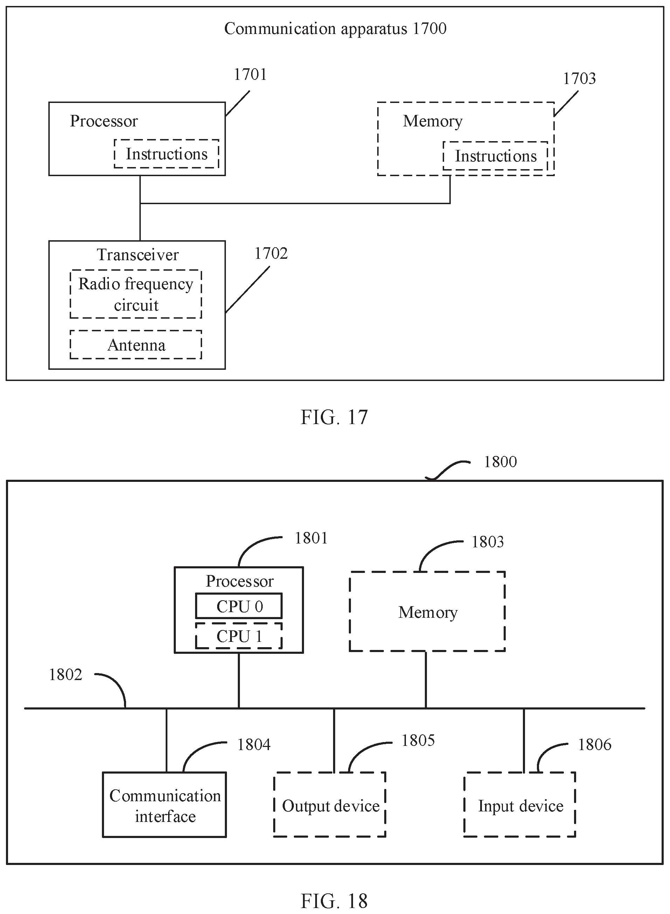

In another possible product form, the network device in embodiments of this application may be implemented by using a general bus architecture. For ease of description, refer to FIG. 17. FIG. 17 is a diagram of a structure of a communication apparatus 1700 according to an embodiment of this application. The communication apparatus 1700 includes a processor 1701 and a transceiver 1702. The communication apparatus 1700 may be a network device, or a chip or a chip system in a network device. FIG. 17 shows only main components of the communication apparatus 1700. In addition to the processor 1701 and the transceiver 1702, the communication apparatus may further include a memory 1703 and an input/output apparatus (which is not shown in the figure).

Optionally, the processor 1701 is mainly configured to: process a communication protocol and communication data, control the entire communication apparatus, execute a software program, and process data of the software program. The memory 1703 is mainly configured to store the software program and the data. The transceiver 1702 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

Optionally, the processor 1701, the transceiver 1702, and the memory 1703 may be connected through a communication bus.

After the communication apparatus is powered on, the processor 1701 may read the software program in the memory 1703, interpret and execute instructions of the software program, and process data of the software program. When data needs to be sent in a wireless manner, the processor 1701 performs baseband processing on the to-be-sent data, and then outputs a baseband signal to a radio frequency circuit. The radio frequency circuit performs radio frequency processing on the baseband signal, and then sends, through the antenna, a radio frequency signal in a form of an electromagnetic wave. When data is to be sent to the communication apparatus, the radio frequency circuit receives a radio frequency signal through the antenna, converts the radio frequency signal into a baseband signal, and outputs the baseband signal to the processor 1701. The processor 1701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in hardware implementation, a person skilled in the art may figure out that the communication apparatus 160 may be in a form of the communication apparatus 1700 shown in FIG. 17.

In an example, functions/implementation processes of the processing module 1601 in FIG. 16 may be implemented by the processor 1701 in the communication apparatus 1700 shown in FIG. 17 by invoking computer-executable instructions stored in the memory 1703. Functions/implementation processes of the transceiver module 1602 in FIG. 16 may be implemented by the transceiver 1702 in the communication apparatus 1700 shown in FIG. 17.

In still another possible product form, the network device in this application may use a composition structure shown in FIG. 18, or include components shown in FIG. 18. FIG. 18 is a composition diagram of a communication apparatus 1800 according to this application. The communication apparatus 1800 may be a network device, or a module, a chip, or a system on a chip in a network device.

As shown in FIG. 18, the communication apparatus 1800 includes at least one processor 1801 and at least one communication interface (FIG. 18 is described merely by using an example in which one communication interface 1804 and one processor 1801 are included). Optionally, the communication apparatus 1800 may further include a communication bus 1802 and a memory 1803.

The processor 1801 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 1801 may be another apparatus having a processing function, for example, a circuit, a component, or a software module. This is not limited.

The communication bus 1802 is configured to connect different components in the communication apparatus 1800, so that the different components can communicate with each other. The communication bus 1802 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to represent the bus in FIG. 18, but this does not indicate that there is only one bus or only one type of bus.

The communication interface 1804 is configured to communicate with another device or a communication network. For example, the communication interface 1804 may be a module, a circuit, a transceiver, or any apparatus that can implement communication. Optionally, the communication interface 1804 may alternatively be an input/output interface located in the processor 1801, and is configured to implement signal input and signal output of the processor.

The memory 1803 may be an apparatus having a storage function, and is configured to store instructions and/or data. The instructions may be computer programs.

For example, the memory 1803 may be a read-only memory (read-only memory, ROM) or another type of static storage device that may store static information and/or instructions; may be a random access memory (random access memory, RAM) or another type of dynamic storage device that may store information and/or instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, and the like), a magnetic disk storage medium or another magnetic storage device, or the like. This is not limited.

It should be noted that the memory 1803 may be independent of the processor 1801, or may be integrated with the processor 1801. The memory 1803 may be located inside the communication apparatus 1800, or may be located outside the communication apparatus 1800. This is not limited. The processor 1801 may be configured to execute the instructions stored in the memory 1803, to implement a method provided in the following embodiments of this application.

In an optional implementation, the communication apparatus 1800 may further include an output device 1805 and an input device 1806. The output device 1805 communicates with the processor 1801, and may display information in a plurality of manners. For example, the output device 1805 may be a liquid crystal display (liquid crystal display, LCD), a light-emitting diode (light-emitting diode, LED) display device, a cathode ray tube (cathode ray tube, CRT) display device, or a projector (projector). The input device 1806 communicates with the processor 1801, and may receive an input from a user in a plurality of manners. For example, the input device 1806 may be a mouse, a keyboard, a touchscreen device, or a sensor device.

In some embodiments, in hardware implementation, a person skilled in the art may figure out that the communication apparatus 160 shown in FIG. 16 may be in a form of the communication apparatus 1800 shown in FIG. 18.

In an example, functions/implementation processes of the processing module 1601 in FIG. 16 may be implemented by the processor 1801 in the communication apparatus 1800 shown in FIG. 18 by invoking computer-executable instructions stored in the memory 1803. Functions/implementation processes of the transceiver module 1602 in FIG. 16 may be implemented by the communication interface 1804 in the communication apparatus 1800 shown in FIG. 18.

It should be noted that the structure shown in FIG. 18 does not constitute specific limitation on the network device. For example, in some other embodiments of this application, the network device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any foregoing method embodiment. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any foregoing method embodiment are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the foregoing described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may be physically separated or not, this is, may be located together in the same place or distributed on a plurality of network units. Parts displayed as units may be or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A communication method, wherein the method comprises:

   determining first information, wherein the first information indicates at least one region corresponding to a first network device, the region is fixed relative to the earth, and a geographical location of the region is determined based on an identifier of the region; and
   sending the first information to a second network device.

2. The method according to claim 1, wherein the geographical location of the region is further determined based on at least one of the following: a radius of the region, an earth radius, and a total quantity of regions.

3. The method according to claim 2, wherein the region comprises a reference location, and three-dimensional coordinates of the reference location and the identifier of the region satisfy the following relationship:

$$RL(i) = R_e \times (\cos \varphi_i \sin \theta_i , \sin \varphi_i \sin \theta_i , \cos \theta_i),$$

$$\varphi_i = 2\pi \left[ \frac{2i}{1+\sqrt{5}} \right],$$

and

$$\theta_i = \cos^{-1}\left(1 - \frac{2i+1}{N_{spot}}\right), i \in \{0, \cdots, N_{spot} - 1\},$$

wherein
$i$ represents the identifier of the region, $RL(i)$ represents the three-dimensional coordinates of the reference location, $R_e$ represents the earth radius, $[x]$ represents a fractional part of $x$, and $N_{spot}$ represents the total quantity of regions.

4. The method according to claim 3, wherein a projection $RL(x_i, y_i)$ of the reference location on a unit square and the identifier of the region satisfy the following relationship:

$$RL(x_i) = (1 - cos\theta_i)/2,$$

and

$$RL(y_i) = \varphi_i(2\pi)^{-1},$$

wherein
the unit square is a square whose vertexes are at $(0, 0)$, $(1, 0)$, $(0, 1)$, and $(1, 1)$ on a Cartesian plane, $RL(x_i)$ represents a projection metric of the reference location on an x-axis of the unit square, and $RL(y_i)$ represents a projection metric of the reference location on a y-axis of the unit square.

5. The method according to claim 3 or 4, wherein Cartesian coordinates $RL(x_i, y_i)$ of the reference location and the identifier of the region satisfy the following relationship:

$$RL(x_i) = i/N_{spot},$$

and

$$RL(y_i) = \left[\frac{i}{\emptyset}\right], \emptyset = \frac{1+\sqrt{5}}{2},$$

wherein
$RL(x_i)$ represents a projection metric of the reference location in an x-axis direction of a Cartesian coordinate system, and $RL(y_i)$ represents a projection metric of the reference location in a y-axis direction of the Cartesian coordinate system.

6. The method according to claim 2, wherein the region comprises a reference location, and three-dimensional coordinates of the reference location and the identifier of the region satisfy the following relationship:

$$RL(i) = R_e \times \left(\sqrt{1 - z_i^2}\cos 2\pi i\,\emptyset, \sqrt{1 - z_i^2}\sin 2\pi i\,\emptyset, z_i\right),$$

$$z_i = \frac{2i-1}{N_{spot}} - 1, i \in \{1, \cdots, N_{spot}\},$$

and

$$\emptyset = \frac{1+\sqrt{5}}{2},$$

wherein
$i$ represents the identifier of the region, $RL(i)$ represents the three-dimensional coordinates of the reference location, $R_e$ represents the earth radius, and $N_{spot}$ represents the total quantity of regions.

7. The method according to claim 2, wherein the region comprises a reference location, and longitude and latitude coordinates of the reference location and the identifier of the region satisfy the following relationship:

$$RL(i) = (\mathrm{lon}(i), \mathrm{lat}(i)),$$

$$\mathrm{lon}(i) = \sin^{-1}\left(\frac{2i}{2N+1}\right), N = \frac{N_{spot}-1}{2},$$

and

$$\mathrm{lat}(i) = 2\pi i \emptyset^{-1}, i \in \{1, \cdots, N_{spot}\}, \emptyset = \frac{1+\sqrt{5}}{2},$$

wherein
$\mathrm{lon}(i)$ represents longitude of the reference location, $\mathrm{lat}(i)$ represents latitude of the reference location, and $N_{spot}$ represents the total quantity of regions.

8. The method according to any one of claims 2 to 7, wherein the radius of the region and the total quantity of regions satisfy the following relationship:

$$N_{spot} = \frac{8\pi R_e^2}{3\sqrt{3}R_{spot}^2},$$

wherein
$R_e$ represents the earth radius, $N_{spot}$ represents the total quantity of regions, and $R_{spot}$ represents the radius of the region.

9. The method according to any one of claims 1 to 8, wherein the first information comprises an identifier of each of the at least one region.

10. The method according to any one of claims 1 to 8, wherein the first information comprises an identifier of a first region and a first threshold; and

> a distance between a reference location in each of the at least one region and a reference location in the first region is less than or equal to the first threshold; or
> a difference between an identifier of each of the at least one region and the identifier of the first region is less than or equal to the first threshold.

11. The method according to any one of claims 1 to 8, wherein the first information comprises a first elevation angle, and an elevation angle at a reference location in each of the at least one region is greater than or equal to the first elevation angle.

12. The method according to any one of claims 9 to 11, wherein the at least one region corresponding to the first network device is the region in a coverage region of the first network device.

13. The method according to any one of claims 1 to 8, wherein the first information is a bitmap, the bitmap comprises M bits, M is a total quantity of regions comprised in a coverage region of the first network device, and M is a positive integer; and
the M bits are in a one-to-one correspondence with M regions comprised in the coverage region, and when an $m^{th}$ bit is set to a preset value, a region corresponding to the $m^{th}$ bit is the region served by a beam of the first network device, and $m = 1, 2, \cdots , M$.

14. The method according to any one of claims 1 to 8, wherein the first information comprises an index of the at least one region in a region set, and the region set comprises the region comprised in a coverage region of the first network device.

15. The method according to any one of claims 9, 13, and 14, wherein the method further comprises:
sending, to the second network device, at least one piece of the following information of the at least one region corresponding to the first network device: a service periodicity, a service duration, a frequency, polarization information, or a service time.

16. The method according to any one of claims 9, and 13 to 15, wherein the at least one region corresponding to the first network device is the region served by the beam of the first network device.

17. The method according to any one of claims 1 to 8, wherein the first information comprises a second elevation angle, and an elevation angle at a reference location in each of the at least one region is less than or equal to the second elevation angle.

18. The method according to any one of claims 9 and 10, 13 and 14, and 17, wherein the method further comprises:
sending, to the second network device, resource information and/or time information associated with the at least one region corresponding to the first network device; and
the resource information comprises at least one of the following: a service periodicity, a service duration, a frequency, or polarization information, and the time information indicates a time at which a target network device starts to cover the at least one region and/or the latest time at which the target network device covers the at least one region.

19. The method according to any one of claims 9 and 10, 13 and 14, and 17 and 18, wherein the at least one region corresponding to the first network device is the region that is uncoverable by the first network device.

20. A communication apparatus, wherein the communication apparatus comprises a processor, and the processor is configured to run a computer program or instructions, to enable the communication apparatus to perform the method according to any one of claims 1 to 19.

21. A computer-readable storage medium, wherein the computer-readable storage medium stores computer instructions or a program, and when the computer instructions or the program is run on a computer, the method according to any one of claims 1 to 19 is performed.

22. A computer program product, wherein the computer program product comprises computer instructions, and when a part or all of the computer instructions are run on a computer, the method according to any one of claims 1 to 19 is performed.

23. A chip, comprising:

a memory, configured to store computer program instructions; and
a processor, configured to execute the computer program instructions, so that a communication apparatus comprising the chip performs the method according to any one of claims 1 to 19.

Moment t0     Moment t1     Moment t2

Earth-moving mode

FIG. 1A

Moment t0     Moment t1     Moment t2

Earth-fixed mode

FIG. 1B

FIG. 2A

FIG. 2B

Regular hexagon with
a smallest area

Regular hexagon with
a relatively large area

Regular hexagon with
a largest area

FIG. 3

FIG. 4

FIG. 5

FIG. 6

FIG. 7

FIG. 8

FIG. 9

EP 4 761 299 A1

Moment T1

FIG. 10A

Moment T2

FIG. 10B

First network device

Second network device

S1101: Determine first information, where the first information indicates at least one region corresponding to the first network device, the region is fixed relative to the earth, and a geographical location of the region is determined based on an identifier of the region

S1102: First information

FIG. 11

Moving direction

First network device

z1
z2
z3

⬡ Region

FIG. 12

First network device

Second network device

⬡ Region

FIG. 13

First network device

Elevation angle

Horizontal
line

P

FIG. 14A

Horizontal line

Q

Elevation angle

First network device

FIG. 14B

First network device          Second network device

FIG. 15

FIG. 16

Communication apparatus 1700

1701

Processor
Instructions

Memory 1703
Instructions

Transceiver 1702
Radio frequency circuit
Antenna

FIG. 17

1800

1801
Processor
CPU 0
CPU 1

Memory 1803

1802

Communication interface 1804

Output device 1805

Input device 1806

FIG. 18

## INTERNATIONAL SEARCH REPORT

| | |
|---|---|
| International application No. | |
| | **PCT/CN2023/122675** |

**A. CLASSIFICATION OF SUBJECT MATTER**

H04W4/021(2018.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

3GPP, CNKI, IEEE, CNTXT, DWPI, ENTXT, ENTXTC, VEN: 卫星, 卫星互联网, 卫星网络, 非地面, 非陆地, 半径, 编码, 标记, 标签, 标识, 标志, 标准, 符, 号, 索引, 码, 区域, 坐标, 位置, 小区, 范围, 覆盖, 网格, 参考, 基准, 地理, 地面, 地球, 第二, 网络, 干扰, 固定, 降低, 开销, 信令, 指示, NTN, satellite, location, area, cover, cell, spot, identif+, ID, lat, lon, region, TA, hexagon+

**C. DOCUMENTS CONSIDERED TO BE RELEVANT**

| Category* | Citation of document, with indication, where appropriate, of the relevant passages | Relevant to claim No. |
|---|---|---|
| Y | WO 2023160332 A1 (HUAWEI TECHNOLOGIES CO., LTD.) 31 August 2023 (2023-08-31) description, paragraphs [0033]-[0036] and [0081]-[0111] | 1, 2, 9-23 |
| Y | CN 116057978 A (PANASONIC INTELLECTUAL PROPERTY CORP. OF AMERICA) 02 May 2023 (2023-05-02) description, paragraphs [0189]-[0248] | 1, 2, 9-23 |
| A | CN 112839361 A (SHANGHAI LANGBO COMMUNICATION TECHNOLOGY CO., LTD.) 25 May 2021 (2021-05-25) entire document | 1-23 |
| A | US 2022030504 A1 (QUALCOMM INC.) 27 January 2022 (2022-01-27) entire document | 1-23 |
| A | THALES. "On Beam Layout Definition for NTN System Level Simulations" *3GPP TSG RAN WG1 Meeting #97, R1-1907687*, 18 May 2019 (2019-05-18), entire document | 1-23 |

☐ Further documents are listed in the continuation of Box C.   ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **14 June 2024** | **20 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/122675**

| Patent document cited in search report | | | Publication date (day/month/year) | Patent family member(s) | | | Publication date (day/month/year) |
|---|---|---|---|---|---|---|---|
| WO | 2023160332 | A1 | 31 August 2023 | CN | 116709165 | A | 05 September 2023 |
| CN | 116057978 | A | 02 May 2023 | WO | 2022029094 | A2 | 10 February 2022 |
| | | | | EP | 3952364 | A1 | 09 February 2022 |
| | | | | JP | 2023536970 | A | 30 August 2023 |
| | | | | US | 2023292275 | A1 | 14 September 2023 |
| CN | 112839361 | A | 25 May 2021 | WO | 2021098479 | A1 | 27 May 2021 |
| | | | | US | 2022279417 | A1 | 01 September 2022 |
| US | 2022030504 | A1 | 27 January 2022 | EP | 4186263 | A1 | 31 May 2023 |
| | | | | WO | 2022020019 | A1 | 27 January 2022 |
| | | | | CN | 116134909 | A | 16 May 2023 |

Form PCT/ISA/210 (patent family annex) (July 2022)